(19) Europäisches Patentamt
European Patent Office
Office européen des brevets

(11) **EP 4 345 737 B1**

(12) **EUROPÄISCHE PATENTSCHRIFT**

(45) Veröffentlichungstag und Bekanntmachung des Hinweises auf die Patenterteilung:
**04.03.2026   Patentblatt 2026/10**

(21) Anmeldenummer: **23199396.5**

(22) Anmeldetag: **25.09.2023**

(51) Internationale Patentklassifikation (IPC):
**G06T 5/00** (2024.01)          **G02B 6/04** (2006.01)
**G02B 6/06** (2006.01)

(52) Gemeinsame Patentklassifikation (CPC):
**G06T 5/00;** G02B 6/04; G02B 6/06;
G06T 2207/10068

(54) **ITERATIVES REKONSTRUIEREN EINES EINGANGSBILDS**

ITERATIVE RECONSTRUCTION OF AN INPUT IMAGE

RECONSTRUCTION ITÉRATIVE D'UNE IMAGE D'ENTRÉE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **27.09.2022   DE 102022124744**

(43) Veröffentlichungstag der Anmeldung:
**03.04.2024   Patentblatt 2024/14**

(73) Patentinhaber: **SCHOTT AG**
**55122 Mainz (DE)**

(72) Erfinder: **Wölfing, Bernd**
**55122 Mainz (DE)**

(74) Vertreter: **Fuchs Patentanwälte Partnerschaft mbB**
**Tower 185**
**Friedrich-Ebert-Anlage 35-37**
**60327 Frankfurt am Main (DE)**

(56) Entgegenhaltungen:
**WO-A1-00/77555          US-A1- 2014 276 111**
**US-A1- 2021 386 277**

• **VAN SICLEN CLINTON DEW: "Iterative method for solution of radiation emission/transmission matrix equations", ARXIV.ORG, 4 January 2011 (2011-01-04), Ithaca, XP093121763, Retrieved from the Internet <URL:https://arxiv.org/pdf/1101.0819.pdf> [retrieved on 20240119], DOI: 10.48550/arxiv.1101.0819**

**Beschreibung**

Die Anmeldung betrifft ein Verfahren zum iterativen Rekonstruieren eines Eingangsbilds aus einem erfassten Ausgabebild, wobei das Ausgabebild wenigstens teilweise durch Übertragen von Bestandteilen des Eingangsbilds mittels eines Lichtleiters, der wenigstens teilweise unsortierte Fasern umfasst, erzeugt ist. Die Anmeldung betrifft ferner ein Computerprogramm-Produkt, eine Vorrichtung und eine Verwendung.

Technischer Hintergrund

Zur Übertragung von Licht sind Lichtleiter in Form von Faserbündeln bekannt. Ein Lichtleiter umfasst dabei typischerweise eine Mehrzahl von Fasern, die sich zwischen einem eingangsseitigen Ende und einem ausgangsseitigen Ende des Lichtleiters erstrecken und die jeweils dazu ausgebildet sind, Licht, das an einem der Enden des Lichtleiters in eine Faser eingekoppelt wird, im Wesentlichen entlang einer Erstreckungsrichtung der jeweiligen Faser zu leiten. Dazu umfasst jede der Fasern lichtdurchlässiges Material, beispielsweise Glasfaser. Die Lichtleitung erfolgt dabei typischerweise durch innere Reflektion des Lichts in der Faser an einer optischen Grenzfläche im Bereich der Mantelfläche der Faser. Dies ermöglicht eine Lichtleitung entlang der Erstreckungsrichtung der jeweiligen Faser selbst bei schräg eingekoppeltem Licht und auch bei einem gekrümmten Verlauf der Faser. Eine Anordnung der Fasern relativ zueinander über den Verlauf des Lichtleiters ist herstellungsbedingt typischerweise nicht kontrolliert. Licht, das in einem bestimmten Bereich innerhalb der Stirnfläche des Lichtleiters in die Enden der dort angeordneten Fasern eintritt, verliert daher typischerweise beim Passieren des Lichtleiters wegen des unsortierten Verlaufs der Fasern seine örtliche Korrelation und tritt so gegenüber der Eingangsseite an ungeordnet verteilten, also örtlich anderen Stellen innerhalb der ausgangsseitigen Stirnfläche des Lichtleiters aus. Mit anderen Worten: Die lichttransportierenden Fasern in einem herkömmlichen faseroptischen Lichtleiter sind im Wesentlichen, insbesondere bis auf Ausnahmen, örtlich unbestimmt zwischen Eingangs- und Ausgangseite angeordnet. Besonders eine optische Übertragung von Bildern ist daher mittels herkömmlicher Lichtleiter nicht möglich.

Zur optischen Übertragung von Bildern sind dagegen Bildleiter bekannt. Diese beruhen im Wesentlichen auf derselben Funktionalität wie Lichtleiter. Im Unterschied zu Lichtleitern weisen Bildleiter jedoch eine sortierte Anordnung der lichttransportierenden Fasern auf. Eine örtliche Korrelation zwischen verschiedenen Bereichen eines Eingangsbilds, die eingangsseitig in jeweils verschiedene Fasern des Bildleiters eingekoppelt werden, bleibt damit auch bei Austreten des Lichts aus dem Bildleiter erhalten. Mit anderen Worten: Die lichttransportierenden Fasern in einem herkömmlichen faseroptischen Bildleiter sind bezüglich ihrer Nachbarschaftsverhältnisse im Wesentlichen örtlich identisch zwischen Eingangs- und Ausgangsseite angeordnet.

Bildleiter gestatten somit eine optische Übertragung eines Bilds. Dies erlaubt beispielweise eine Erfassung von Bildinformationen und deren optische Weiterleitung an Orten, an denen eine direkte sensorische Erfassung des Bilds, etwa mittels einer Kamera, nicht oder nur erschwert möglich ist. Typische Anwendungen sind medizinische Sonden oder optische Überwachung unter Bedingungen, die für eine Kamera nur unzureichenden Raum bieten oder anderweitig ungünstig sind.

Bildleiter bedingen gegenüber Lichtleitern jedoch einen erheblich höheren Produktionsaufwand und damit einhergehend erheblich höhere Produktionskosten. Zudem ist bei vielen Anwendungen ein hohes Maß an optischer Güte, bspw. hohe Auflösung bzw. hoher Detailgrad, Schärfe und/oder Kontrast eines übertragenen Bilds, wie sie durch Bildleiter erzielbar ist, nicht erforderlich.

Es ist daher eine Technik wünschenswert, die die vorgenannten Nachteile mildert oder vermeidet.

In dem Stand der Technik sind die folgenden Verfahren bekannt.

Patentanmeldung WO 00/77555 A1 offenbart eine Bildübertragung über einen optischen Bündel mit einer Vielzahl von Fasern. Eine Abbildungsfunktion wird auf die durch den Bündel vermischten Bilddaten angewendet, um die Bilddaten zur Verwendung in einem Bildgebungssystem zu reproduzieren.

Van Siclen Clinton Dew: "Iterative method for solution of radiation emission/transmission matrix equations", arXiv.org, 4. Januar 2011, DOI: 10.48550/arxiv.1101.0819, offenbart ein iteratives Verfahren zur Bildrekonstruktion mittels Transmissionsmatrix.

Abriss der Erfindung

Die Aufgabe wird durch ein Verfahren gemäß Anspruch 1, ein Computerprogramm-Produkt gemäß Anspruch 12, eine Vorrichtung gemäß Anspruch 13 und eine Verwendung gemäß Anspruch 15 gelöst.

Demnach umfasst gemäß einem ersten Aspekt ein Verfahren zum iterativen Rekonstruieren eines Eingangsbilds aus einem erfassten Ausgabebild, wobei das Ausgabebild wenigstens teilweise durch Übertragen von Bestandteilen des Eingangsbilds mittels eines Lichtleiters, der wenigstens teilweise unsortierte Fasern umfasst, erzeugt und mittels eines Bildsensors, der eine Mehrzahl von Sensorpunkten umfasst, ist, ein Berechnen eines Eingangsbildgebiet-Helligkeitswerts für ein erstes Gebiet des Eingangsbilds wenigstens teilweise auf der Grundlage von wenigstens einem ersten Sensorpunkt-Helligkeitswert, der einem ersten Sensorpunkt des Bildsensors zugeordnet ist und der auf eine erfasste Helligkeit des Ausgabebilds im Bereich des ersten Sensorpunkts hinweist, einem ersten Gewichtungsfaktor, der dem ersten Gebiet des Eingangsbilds in Bezug auf den ersten Sensorpunkt zugeordnet ist, und wenigstens einem weiteren Eingangsbildgebiet-Helligkeitswert, der einem weiteren Gebiet des Eingangsbilds zugeordnet ist und der mit einem weiteren Gewichtungsfaktor, der dem weiteren Gebiet des Eingangsbilds in Bezug auf den ersten Sensorpunkt zugeordnet ist, gewichtet ist. Das Verfahren umfasst außerdem ein Ersetzen eines dem ersten Gebiet des Eingangsbilds zugeordneten ersten Eingangsbildgebiet-Helligkeitswerts durch den berechneten Eingangsbildgebiet-Helligkeitswert zur Verwendung als fortan erster Eingangsbildgebiet-Helligkeitswert. Die vorgenannten Verfahrensschritte eines Berechnens und eines Ersetzens werden dabei sequenziell, insbesondere iterativ, angewendet.

Das sequenzielle Anwenden der Verfahrensschritte des Berechnens und des Ersetzens kann ein sequenzielles Anwenden der Verfahrensschritte des Berechnens und des Ersetzens auf jeden von mehreren Sensorpunkt-Helligkeitswerten, die verschiedenen Sensorpunkten des Bildsensors zugeordnet sind, und/oder für jedes von mehreren Gebieten des Eingangsbilds, und/oder für jeden von ein oder mehreren Gewichtungsfaktoren, die jeweils einem beliebigen Gebiet des Eingangsbilds in Bezug auf einen selben Sensorpunkt des Bildsensors zugeordnet sind, oder in Form einer wiederholten Durchführung zunächst des Berechnens (210) für jedes von mehreren Gebieten (EG-1 - EG-q) des Eingangsbilds (E) und anschließend des Ersetzens (220) der den mehreren Gebieten (EG-1 - EG-q) des Eingangsbilds (E) zugeordneten Eingangsbildgebiet-Helligkeitswerte ($H_1$ - $H_q$) durch die berechneten Eingangsbildgebiet-Helligkeitswerte ($H_1$'- $H_q$') umfassen.

Die Fasern können wenigstens teilweise unsortiert sein derart, dass Licht, das in einem bestimmten Bereich innerhalb einer Stirnfläche des Lichtleiters in Enden der dort angeordneten Fasern eintritt, beim Passieren des Lichtleiters seine örtliche Korrelation verliert. Ein Anteil der Fasern des Lichtleiters, die in solcher Weise unsortiert sind, kann mehr als 10%, insbesondere mehr als 90%, betragen.

Gemäß einer ersten Ausgestaltung kann das sequenzielle Anwenden ein sequenzielles Anwenden der Verfahrensschritte eines Berechnens und eines Ersetzens auf jeden Sensorpunkt-Helligkeitswert, der einem beliebigen Sensorpunkt der Mehrzahl von Sensorpunkten des Bildsensors zugeordnet ist, und/oder für jeden von ein oder mehreren Gewichtungsfaktoren, die jeweils irgendeinem Gebiet des Eingangsbilds in Bezug auf einen jeweiligen Sensorpunkt des Bildsensors zugeordnet ist, umfassen.

Gemäß einer weiteren Ausgestaltung kann das Berechnen des Eingangsbildgebiet-Helligkeitswerts, d.h. vor einem Ersetzen, auf der Grundlage von mehreren Sensorpunkt-Helligkeitswerten, die verschiedenen Sensorpunkten des Bildsensors zugeordnet sind und die jeweils auf eine erfasste Helligkeit des Ausgabebilds im Bereich des jeweiligen Sensorpunkts hinweisen, erfolgen. Dabei kann das Berechnen, d.h. vor einem Ersetzen, für jeden von ein oder mehreren Gewichtungsfaktoren, die in Bezug auf einen jeweiligen Sensorpunkt des Bildsensors jeweils irgendeinem Gebiet des Eingangsbilds zugeordnet sind, durchgeführt werden.

Bei der weiteren Ausgestaltung kann das Berechnen zudem für jeden der mehreren Sensorpunkt-Helligkeitswerte wenigstens teilweise auf der Grundlage von einem jeweils ersten Gewichtungsfaktor, der dem ersten Gebiet des Eingangsbilds in Bezug auf den jeweiligen Sensorpunkt zugeordnet ist, und wenigstens einem jeweils weiteren Eingangsbildgebiet-Helligkeitswert, der einem jeweils weiteren Gebiet des Eingangsbilds zugeordnet ist und der mit einem jeweils weiteren Gewichtungsfaktor, der dem jeweils weiteren Gebiet des Eingangsbilds in Bezug auf den jeweiligen Sensorpunkt zugeordnet ist, gewichtet ist, erfolgen.

Bei der weiteren Ausgestaltung kann das Berechnen zudem für jeden der mehreren Sensorpunkt-Helligkeitswerte jeweils zum Bestimmen eines sensorpunktspezifischen Helligkeitswerts für das erste Gebiet des Eingangsbilds erfolgen. Das Berechnen des Eingangsbildgebiet-Helligkeitswerts kann dabei auf der Grundlage der mehreren sensorpunktspezifischen Helligkeitswerte für das erste Gebiet (EG-i) des Eingangsbilds (E) erfolgen. Das Berechnen des Eingangsbildgebiet-Helligkeitswerts auf der Grundlage der mehreren sensorpunktspezifischen Helligkeitswerte für das erste Gebiet kann zudem ein Mitteln der mehreren sensorpunktspezifischen Helligkeitswerte für das erste Gebiet umfassen. Das Mitteln kann gemäß einer Gewichtung der mehreren sensorpunktspezifischen Helligkeitswerte für das erste Gebiet auf der Grundlage der Gewichtungsfaktoren, die dem ersten Gebiet in Bezug auf die betreffenden Sensorpunkte zugeordnet sind, erfolgen.

Bei der weiteren Ausgestaltung kann das sequenzielle Anwenden für jedes von mehreren Gebieten des Eingangsbilds erfolgen. Alternativ kann bei der weiteren Ausgestaltung das sequenzielle Anwenden in Form einer wiederholten Durchführung zunächst des Berechnens (210) für jedes von mehreren Gebieten (EG-1 - EG-q) des Eingangsbilds (E) und anschließend des Ersetzens (220) der den mehreren Gebieten (EG-1 - EG-q) des Eingangsbilds (E) zugeordneten Eingangsbildgebiet-Helligkeitswerte ($H_1$ - $H_q$) durch die berechneten Eingangsbildgebiet-Helligkeitswerte ($H_1$'- $H_q$') erfolgen.

Das Verfahren kann ein wiederholtes Durchführen des sequenziellen Anwendens, insbesondere bis zu einem Eintreten eines vorbestimmten Abbruchkriteriums, umfassen. Alternativ, wenn das sequenzielle Anwenden in Form einer wiederholten Durchführung zunächst des Berechnens für jedes von mehreren Gebieten des Eingangsbilds und anschließend des Ersetzens der den mehreren Gebieten des Eingangsbilds zugeordneten Eingangsbildgebiet-Helligkeitswerte durch die berechneten Eingangsbildgebiet-Helligkeitswerte erfolgt, kann das sequenzielle Anwenden bis zu einem Eintreten eines vorbestimmten Abbruchkriteriums erfolgen. Das Abbruchkriterium kann eine Anzahl von Durchführungen des Verfahrens für dasselbe Gebiet bzw. dieselben Gebiete des Eingangsbilds und/oder ein Unterschreiten einer Schwellenwertdifferenz zwischen aufeinanderfolgenden Berechnungen eines Eingangsbildgebiet-Helligkeitswerts für dasselbe Gebiet bzw. dieselben Gebiete des Eingangsbilds umfassen. Die Schwellenwertdifferenz kann das 0,1-fache oder weniger, vorzugsweise das 0,05-fache oder weniger, bevorzugt das 0,03-fache einer Helligkeit des jeweiligen Eingangsbildgebiets betragen. Eine niedrige Schwellenwertdifferenz begünstigt dabei ein verlässliches Rekonstruktionsergebnis für das Eingangsbild. Eine hohe Schwellenwertdifferenz begünstigt wegen des früheren Erreichens der Schwellenwertdifferenz eine schnelle Verfahrensbeendigung.

Zusätzlich oder alternativ kann das Verfahren ferner umfassen, vor dem Berechnen, Bestimmen, für jeden der Mehrzahl von Sensorpunkten, eines Satzes von Gewichtungsfaktoren, die jeweils einem verschiedenen Gebiet des Eingangsbilds in Bezug auf den jeweiligen Sensorpunkt zugeordnet sind.

Das Bestimmen des Satzes von Gewichtungsfaktoren kann wenigstens teilweise auf der Grundlage einer Proportionalität erfolgen, mit der eine Helligkeit in dem Gebiet des Eingangsbilds, dem ein jeweiliger Gewichtungsfaktor in Bezug auf den jeweiligen Sensorpunkt zugeordnet ist, zu einer erfassten Helligkeit des Ausgabebilds im Bereich des Sensorpunkts beiträgt.

Die Proportionalität kann dabei wenigstens teilweise bedingt sein durch eine Faseranordnung des Lichtleiters.

Das Bestimmen des Satzes von Gewichtungsfaktoren kann ferner umfassen: Ermitteln, für jedes aus einer Mehrzahl von Gebieten des Eingangsbilds, einer Proportionalität, mit der eine Helligkeit in dem jeweiligen Gebiet des Eingangsbilds zu einer erfassten Helligkeit des Ausgabebilds im Bereich des Sensorpunkts beiträgt, Verwerfen von Gebieten des Eingangsbilds, bei denen die Proportionalität weniger als eine Schwellenwertproportionalität beträgt, und Bestimmen eines Gewichtungsfaktors für jedes der verbleibenden Gebiete wenigstens teilweise auf der Grundlage der Proportionalität, die dem jeweiligen Gebiet zugeordnet ist. Die Schwellenwertproportionalität kann 0,5 oder weniger, vorzugsweise 0,2 oder weniger, bevorzugt 0,1 oder weniger betragen. Zusätzlich oder alternativ kann die Schwellenwertproportionalität 0,005 oder mehr, vorzugsweise 0,008 oder mehr, bevorzugt 0,01 oder mehr betragen. Die Schwellenwertproportionalität kann im Bereich zwischen 0,005 und 0,5, vorzugsweise zwischen 0,008 und 0,2, bevorzugt zwischen 0,01 und 0,1 betragen. Eine niedrige Schwellenwertproportionalität bewirkt dabei, dass auch verhältnismäßig schwach zur erfassten Helligkeit beitragende Eingangsbildgebiete berücksichtigt werden, sodass eine genauere Rekonstruktion des Eingangsbilds begünstigt ist. Eine hohe Schwellenwertproportionalität bewirkt, dass verhältnismäßig viele Eingangsbildgebiete aus der Berechnung ausgeschlossen werden können, sodass mit verhältnismäßig geringem Informationsverlust eine hohe Effizienz des Verfahrens begünstigt ist. Das Verfahren kann dabei zudem ein Normalisieren der Gewichtungsfaktoren umfassen.

Das Berechnen kann ferner wenigstens teilweise gemäß einer mathematischen Funktion erfolgen, mittels deren der erste Sensorpunkt-Helligkeitswert in Beziehung gesetzt ist zu einer Summe der um ihren jeweiligen Gewichtungsfaktor gewichteten Eingangsbildgebiet-Helligkeitswerte.

Das Verfahren kann ferner umfassen, vor einem ersten Berechnen eines Eingangsbildgebiet-Helligkeitswerts, Zuordnen eines Helligkeits-Startwerts zu jedem Gebiet des Eingangsbilds als der Eingangsbildgebiet-Helligkeitswert des jeweiligen Gebiets. Der Helligkeits-Startwert für jedes Gebiet kann dabei, insbesondere unabhängig von dem Eingangsbild, vorbestimmt sein. Alternativ kann der Helligkeits-Startwert für jedes Gebiet auf der Grundlage wenigstens einer Charakteristik, insbesondere einer mittleren Helligkeit des Eingangsbilds, die mittels des Bildsensors erfasst ist, bestimmt sein. Ferner kann alternativ der Helligkeits-Startwert für jedes Gebiet auf der Grundlage eines vorherigen rekonstruierten Eingangsbilds, insbesondere einem jeweiligen Eingangsbildgebiet-Helligkeitswert jedes Gebiets eines vorherigen rekonstruierten Eingangsbilds, bestimmt sein. Das ist besonders geeignet bei einer Anwendung des Verfahrens auf eine Bildserie.

Das Berechnen kann ferner eine Dämpfung auf der Grundlage von einem oder mehreren zuvor berechneten Eingangsbildgebiet-Helligkeitswerten des ersten Gebiets des Eingangsbilds umfassen. Die Dämpfung kann ein Konvergenzverhalten und/oder eine Stabilität des Verfahrens zwischen iterativen Durchführungen des Verfahrens begünstigen. Dabei kann ein anhand der Gewichtungsfaktoren bestimmtes Verhältnis zwischen einer erfassten Helligkeit im Bereich des für das Berechnen herangezogenen Sensorpunkts bzw. zwischen erfassten Helligkeiten in den Bereichen der für das Berechnen herangezogenen Sensorpunkte und einer daraus bestimmten Helligkeit des ersten Gebiets des Eingangsbilds mit dem einem oder den mehreren zuvor berechneten Eingangsbildgebiet-Helligkeitswerten des ersten Gebiets gemittelt werden. Das Mitteln kann dabei gemäß einer Dämpfungsgewichtung des einen oder der mehreren zuvor berechneten Eingangsbildgebiet-Helligkeitswerte des ersten Gebiets und der bestimmten Helligkeit des ersten Gebiets erfolgen. Die Dämpfungsgewichtung kann dabei während aufeinander folgender Durchführungen des Verfahrens für das erste Gebiet konstant sein. Alternativ kann die Dämpfungsgewichtung während aufeinander folgender Durchführungen des Verfahrens für das erste Gebiet variieren.

Zusätzlich oder alternativ kann das Berechnen eine örtliche Glättung auf der Grundlage von einem oder mehreren Eingangsbildgebiet-Helligkeitswerten, die benachbarten Gebieten des ersten Gebiets in dem Eingangsbild zugeordnet sind, umfassen. Die Glättung kann eine Angleichung der Helligkeitswerte benachbarter Eingangsbildgebiete entsprechend einem zusammenhängenden Bildobjekt in dem Eingangsbild begünstigen. Dabei kann ein anhand der Gewichtungsfaktoren bestimmtes Verhältnis zwischen einer erfassten Helligkeit im Bereich des für das Berechnen herangezogenen Sensorpunkts bzw. zwischen erfassten Helligkeiten in den Bereichen der für das Berechnen herangezogenen Sensorpunkte und einer daraus bestimmten Helligkeit des ersten Gebiets des Eingangsbilds mit dem einen oder den mehreren Eingangsbildgebiet-Helligkeitswerten, die benachbarten Gebieten des ersten Gebiets in dem Eingangsbild zugeordnet sind, gemittelt werden. Das Mitteln kann dabei gemäß einer Glättungsgewichtung des einen oder der mehreren Eingangsbildgebiet-Helligkeitswerte, die benachbarten Gebieten des ersten Gebiets in dem Eingangsbild zugeordnet sind, und der bestimmten Helligkeit des ersten Gebiets erfolgen.

Das Mitteln beim Durchführen der Dämpfung und/oder der Glättung kann ein Bestimmen eines arithmetischen Mittelwerts, eines geometrischen Mittelwerts und/oder eines auf andere Weise definierten Zwischenwerts der zum Mitteln jeweils herangezogenen Werte umfassen.

Die Mehrzahl von Sensorpunkten kann in einer Sensorfläche des Bildsensors angeordnet sein. Dabei kann die Mehrzahl von Sensorpunkten bestimmt sein durch eine Gesamtzahl von Sensorpunkten des Bildsensors. Alternativ kann die Mehrzahl von Sensorpunkten bestimmt sein durch eine Untergruppe von Sensorpunkten des Bildsensors, mittels deren das Ausgabebild erfasst ist.

Der Bildsensor kann mehrere Farbkanäle aufweisen. Dabei kann das Verfahren, insbesondere das sequenzielle Anwenden der Verfahrensschritte eines Berechnens und eines Ersetzens, für jeden der mehreren Farbkanäle getrennt durchgeführt werden. Das Bestimmen der Sätze von Gewichtungsfaktoren kann dabei für die mehreren Farbkanäle einheitlich erfolgen. Alternativ kann das Bestimmen der Sätze von Gewichtungsfaktoren für jeden der mehreren Farbkanäle getrennt erfolgen.

Zum Bilden der mehreren Farbkanäle kann jeder Sensorpunkt aus der Mehrzahl von Sensorpunkten Mittel zum Erfassen einer Helligkeit gemäß verschiedenen Lichtwellenlängenbereichen umfassen. In einer Ausgestaltung umfasst dabei jeder Sensorpunkt, insbesondere in Form eines Sensorpixels, mehrere Sensor-Teilpunkte, insbesondere in Form von Sensor-Mikropixeln. Jeder der Sensor-Teilpunkte eines Sensorpunkts ist dabei zum Erfassen einer Helligkeit gemäß einem der verschiedenen Lichtwellenlängenbereiche ausgebildet. Das Bestimmen der Sätze von Gewichtungsfaktoren kann dabei für die mehreren Sensor-Teilpunkte eines Sensorpunkts einheitlich erfolgen.

In einer alternativen Ausgestaltung ist jeder Sensorpunkt zum Erfassen einer Helligkeit gemäß einem der verschiedenen Lichtwellenlängenbereiche ausgebildet. Sensorpunkte, die bezüglich ihres Lichtwellenlängenbereichs verschieden sind, können dabei in einer Sensorfläche des Bildsensors verteilt angeordnet sein, insbesondere abwechselnd gemäß versetzten Rastern. Das Bestimmen der Sätze von Gewichtungsfaktoren kann dabei für jeden der Sensorpunkte getrennt erfolgen. Zusätzlich oder alternativ kann die Mehrzahl von Sensorpunkten ferner bestimmt sein durch einen identischen Farbkanal, dem sämtliche betreffenden Sensorpunkte bei einer Durchführung des Verfahrens, insbesondere des sequenziellen Anwendens der Verfahrensschritte eines Berechnens und eines Ersetzens, zugeordnet sind.

Das Verfahren kann außerdem ein Zusammenfügen der für jeden der mehreren Farbkanäle ermittelten Eingangsbildgebiet-Helligkeitswerte, insbesondere zum Rekonstruieren eines mehrfarbigen Eingangsbilds, umfassen.

Die mehreren Farbkanäle können wenigstens einen roten, einen grünen und einen blauen Farbkanal umfassen. Alternativ können die mehreren Farbkanäle wenigstens einen cyan, einen magenta und einen gelben Farbkanal umfassen. Zusätzlich oder alternativ können die mehreren Farbkanäle wenigstens einen Farbkanal im infraroten Lichtwellenlängenbereich und/oder wenigstens einen Farbkanal im ultravioletten Lichtwellenlängenbereich umfassen.

Der Lichtleiter und der Bildsensor können derart hergerichtet sein, dass eine Anzahl der Fasern in dem Lichtleiter und eine Anzahl der Sensorpunkte des Bildsensors, mittels deren das Ausgabebild erfasst wird, um nicht mehr als das Zwanzigfache, vorzugsweise um nicht mehr als das Zehnfache, bevorzugt um nicht mehr als das Dreifache, der jeweils kleineren der beiden Anzahlen voneinander verschieden sind.

Das Eingangsbild kann einer optischen Projektion zumindest eines Bereichs einer Umgebung entsprechen, die in den Lichtleiter eingekoppelt ist.

Das Verfahren kann ferner umfassen: Speichern und/oder Ausgeben der Eingangsbildgebiet-Helligkeitswerte in einem Datenformat, das geeignet ist, eine Rekonstruktion des Eingangsbilds zu speichern bzw. darzustellen.

Gemäß einem weiteren Aspekt wird ein Computerprogramm-Produkt vorgestellt. Das Computerprogramm-Produkt umfasst Teile von Programmcode, die, wenn sie auf einer programmierbaren Computeranlage ausgeführt werden, die Computeranlage zum Durchführen des Verfahrens der hier vorgestellten Art veranlassen.

Gemäß einem weiteren Aspekt wird eine Vorrichtung vorgestellt. Die Vorrichtung umfasst wenigstens einen Lichtleiter, der wenigstens teilweise unsortierte Fasern umfasst, und wenigstens einen Bildsensor, der eine Mehrzahl von Sensorpunkten umfasst und dazu ausgebildet ist, ein Ausgabebild zu erfassen, das wenigstens teilweise durch Übertragen von Bestandteilen eines Eingangsbilds mittels des Lichtleiters erzeugt ist.

Die Vorrichtung kann ferner eine Verarbeitungseinrichtung umfassen, die eine Prozessoreinheit und eine Speichervorrichtung, die mit der Prozessoreinheit operativ verbunden ist, umfasst, wobei die Prozessoreinheit dazu konfiguriert ist, ein Verfahren der hier vorgestellten Art durchzuführen.

Der Lichtleiter und der Bildsensor können derart hergerichtet sein, dass eine Anzahl der Fasern in dem Lichtleiter und eine Anzahl der Sensorpunkte des Bildsensors, mittels deren das Ausgabebild erfasst ist, um nicht mehr als das Zwanzigfache, vorzugsweise um nicht mehr als das Zehnfache, bevorzugt um nicht mehr als das Dreifache, der jeweils kleineren der beiden Anzahlen voneinander verschieden sind.

Gemäß einem weiteren Aspekt wird eine Verwendung eines Verfahrens, eines Computerprogrammprodukts und/oder einer Vorrichtung der hier jeweils vorgestellten Art vorgestellt. Die Verwendung erfolgt zum Rekonstruieren einer Mehrzahl von Eingangsbildern in Echtzeit, wobei die Eingangsbilder im Zusammenhang einer Echtzeit-Bilderfassung in den Lichtleiter eingekoppelt sind.

Die Verwendung kann zum Zweck einer Überwachung einer Bewegung und/oder einer Anzahl beweglicher Objekte, die mittels der Mehrzahl von Eingangsbildern dargestellt sind, erfolgen.

Kurze Beschreibung der Zeichnungen

Weitere Merkmale, Vorteile und Ziele der Erfindung werden aus den Zeichnungen und der ausführlichen Beschreibung deutlich. Es zeigen:

Fig. 1A bis 1D     einander ergänzende Ausschnitte einer Vorrichtung zum iterativen Rekonstruieren eines Eingangsbilds, gemäß einem Beispiel;

Fig. 2     ein Flussdiagramm für ein Verfahren zum iterativen Rekonstruieren eines Eingangsbilds, gemäß einem Beispiel;

Fig. 3     eine Vorrichtung zum iterativen Rekonstruieren eines Eingangsbilds, gemäß einem weiteren Beispiel;

Fig. 4     ein Flussdiagramm für ein Verfahren zum iterativen Rekonstruieren eines Eingangsbilds, gemäß einem weiteren Beispiel;

Fig. 5     ein Flussdiagramm für eine Verwendung, und

Fig. 6A und 6B     einander ergänzende Ausschnitte eines Beispiels für ein iteratives Rekonstruieren eines Eingangsbilds.

Ausführliche Beschreibung

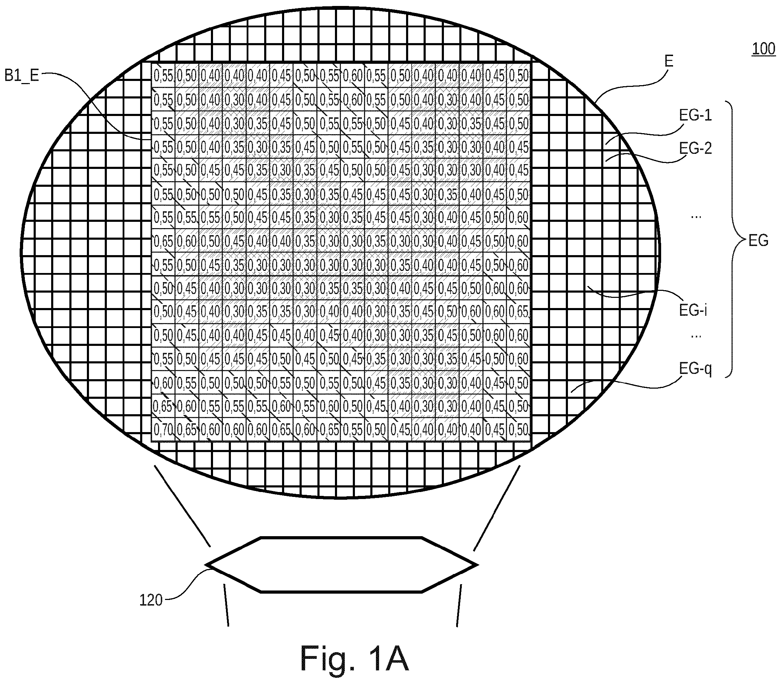

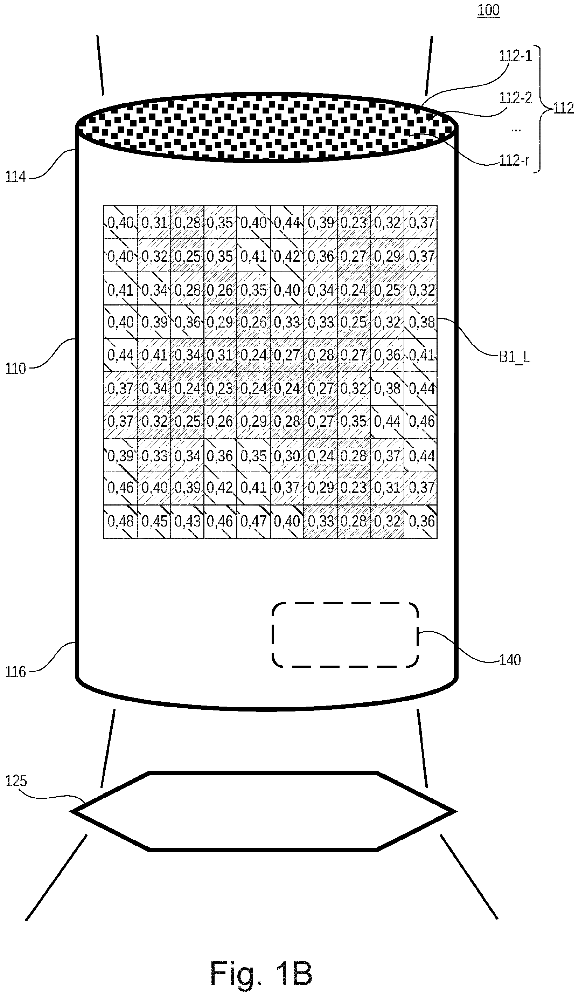

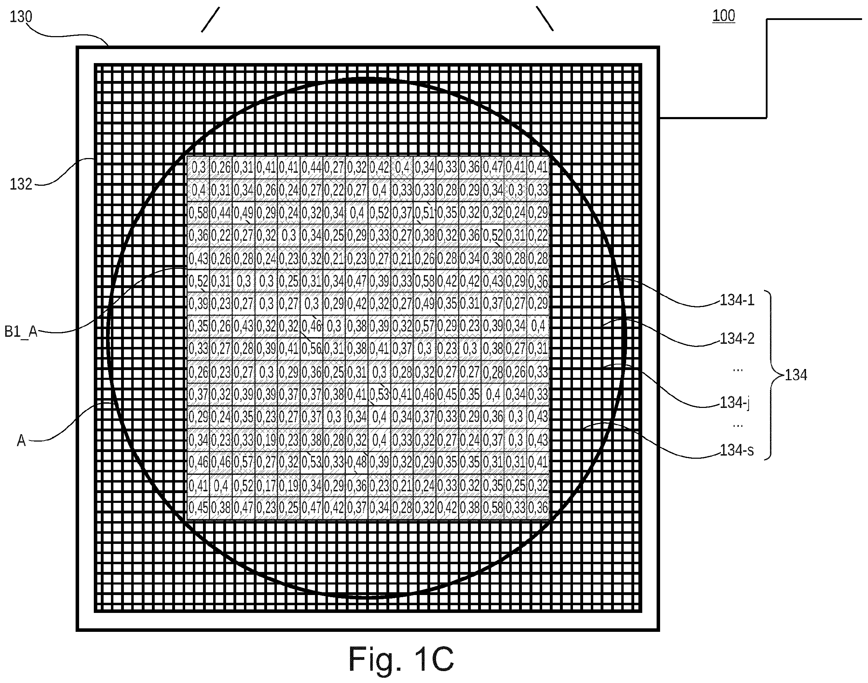

Fig. 1A bis 1D zeigen zusammengenommen schematisch und exemplarisch eine Vorrichtung 100 zum iterativen Rekonstruieren eines Eingangsbilds. Fig. 1A bis 1D zeigen dabei jeweils einen von mehreren einander ergänzenden Ausschnitten der Vorrichtung 100. Die Vorrichtung 100 umfasst einen Lichtleiter 110, wie in Fig. 1B gezeigt, und einen Bildsensor 130, wie in Fig. 1C gezeigt. Der Lichtleiter 110 umfasst eine Mehrzahl von Fasern 112, die sich zwischen einem eingangsseitigen Ende 114 und einem ausgangsseitigen Ende 116 des Lichtleiters 110 erstrecken und die jeweils dazu ausgebildet sind, Licht, das an einem der Enden 114, 116 des Lichtleiters 110 in eine Faser 112 eingekoppelt wird, im Wesentlichen entlang einer Erstreckungsrichtung der jeweiligen Faser 112 zu leiten. Dazu umfasst jede der Fasern 112 lichtdurchlässiges Material, beispielsweise Glasfaser. Die Lichtleitung erfolgt dabei typischerweise durch innere Reflektion des Lichts in der Faser 112 an einer optischen Grenzfläche im Bereich der Mantelfläche der Faser 112. Dies ermöglicht eine Lichtleitung entlang der Erstreckungsrichtung der jeweiligen Faser 112 auch bei schräg eingekoppeltem Licht und/oder einem gekrümmten Verlauf der Faser 112. Jede einzelne der Fasern 112-1 - 112-r fungiert dabei zudem im Wesentlichen als eigenständiges Medium zur Lichtleitung unabhängig von einer Lichtleitung in den übrigen Fasern 112-1 - 112-r.

Die Fasern 112 sind in dem Lichtleiter 110 wenigstens teilweise unsortiert. Das heißt, dass eine Anordnung einzelner Fasern 112-1 - 112-r relativ zueinander im Bereich des eingangsseitigen Endes 114 des Lichtleiters 110 herstellungsbedingt nicht bzw. allenfalls zufällig übereinstimmt mit einer Anordnung der jeweiligen Fasern 112-1 - 112-r relativ zueinander im Bereich des ausgangsseitigen Endes 116 des Lichtleiters 110.

Wie in Fig. 1B schematisch dargestellt, weist das eingangsseitige Ende 114 des Lichtleiters 110 eine Anordnung der Fasern 112 im Wesentlichen gemäß einem Bündel der Fasern 112 auf. Eine Stirnfläche des eingangsseitigen Endes 114 des Lichtleiters 110, an dem effektiv eine Einkopplung von Licht erfolgt, entspricht dabei im Wesentlichen einer Nebeneinanderanordnung jeweiliger Querschnittsflächen der Fasern 112-1 - 112-r. Infolge der wenigstens teilweise unsortierten Anordnung der Fasern 112 in dem Lichtleiter 110 tritt Licht, das an dem eingangsseitigen Ende 114 auf einen zusammenhängenden Teilbereich der Stirnfläche, entsprechend einer Untergruppe benachbarter Fasern 112, auftritt, am ausgangsseitigen Ende 116 des Lichtleiters 110 typischerweise unzusammenhängend und ungeordnet verteilt auf mehrere Stellen der Stirnfläche des ausgangsseitigen Endes 116 aus. Dies folgt daraus, dass jede der Fasern, die eingangsseitig die benachbarte Untergruppe bilden, an einer anderen beliebigen Stelle in der Stirnfläche des ausgangsseitigen Endes 116 des Lichtleiters 110 austreten kann. Information über eine örtliche Korrelation von Licht, das über die Stirnfläche des eingangsseitigen Endes 114 des Lichtleiters 114 in verschiedene Fasern 112 eingekoppelt wird, geht dadurch beim Transport des Lichts durch den Lichtleiter 110 bis zum Austreten des Lichts am ausgangsseitigen Ende 116 verloren.

In Fig. 1B ist der Lichtleiter 110 vereinfacht als gerader Zylinder dargestellt. In typischen Beispielen ist der Lichtleiter 110 flexibel ausgebildet, wobei zudem eine Länge des Lichtleiters 110 um mehrere Größenordnungen größer ist als ein Durchmesser des Lichtleiters 110.

Der Bildsensor 130 ist ausgangsseitig vom Lichtleiter 110 angeordnet. Dies entspricht einer Anordnung des in Fig. 1C dargestellten Bildsensors 130 in Verlängerung der Darstellung von Fig. 1B am unteren Bildrand. Der Bildsensor 130 ist dabei zudem derart angeordnet, dass aus dem ausgangsseitigen Ende 116 des Lichtleiters 110 austretendes Licht auf eine Sensorfläche 132 des Bildsensors 130 trifft. Dies ist in Fig. 1B und 1C durch die diagonalen Linienpaare am unteren Bildrand von Fig. 1B sowie am oberen Bildrand von Fig. 1C schematisch dargestellt. Das auf die Sensorfläche 132 auftreffende Licht wird dort mittels einer Mehrzahl von Sensorpunkten 134 des Bildsensors 130 erfasst. Bei dem Bildsensor 130 handelt es sich beispielsweise um einen CCD-Sensor.

In dem gezeigten Beispiel umfasst die Vorrichtung 100 ferner eine Ausgabeoptik 125. Die Ausgabeoptik 125 ist dabei derart angeordnet, dass aus dem ausgangsseitigen Ende 116 des Lichtleiters 110 austretendes Licht auf einen Bereich der Sensorfläche 132 von zweckmäßig gewählter Größe projiziert wird.

Das eingangsseitige Ende 114 des Lichtleiters 110 ist auf ein Eingangsbild E, wie in Fig. 1A gezeigt, gerichtet. Die Darstellung in Fig. 1A entspricht dabei einer Verlängerung der Darstellung von Fig. 1B am oberen Bildrand. Das Eingangsbild E entspricht beispielsweise dem optischen Abbild einer zu überwachenden Umgebung. Das Eingangsbild E wird über das eingangsseitige Ende 114 in den Lichtleiter 110 eingekoppelt. In dem gezeigten Beispiel umfasst die Vorrichtung 110 zu diesem Zweck ferner eine Eingangsoptik 120. Die Eingangsoptik 120 ist dabei dazu ausgebildet, das Eingangsbild E auf die Stirnfläche des eingangsseitigen Endes 114 des Lichtleiters 110 optisch zu projizieren. Dies ist in Fig. 1A und 1B durch die diagonalen Linienpaare am unteren Bildrand von Fig. 1A sowie am oberen Bildrand von Fig. 1B schematisch dargestellt.

Das in den Lichtleiter 110 eingekoppelte Eingangsbild E wird mittels der Fasern 112 des Lichtleiters 110 transportiert. Dabei transportieren jeweils verschiedene Fasern 112-1 - 112-r Licht, das verschiedenen örtlichen Bestandteilen des Eingangsbilds E zugeordnet ist, gemäß einer Erstreckung des projizierten Eingangsbilds E über das eingangsseitige Ende 114 des Lichtleiters und einer Anordnung der einzelnen Fasern 112-1 - 112-r am eingangsseitigen Ende 114. Das am ausgangsseitigen Ende 114 des Lichtleiters aus sämtlichen der Fasern 112 austretende Licht bildet das Ausgabebild A. In dem Ausgabebild A ist, wie voranstehend beschrieben, die örtliche Korrelation verschiedener Bestandteile des Eingangsbilds E wegen der wenigstens teilweise unsortierten Anordnung der Fasern 112 über den Verlauf des Lichtleiters 110 verloren.

Wie in Fig. 1C dargestellt, ist die Sensorfläche 132 so bemessen, dass, gegebenenfalls in Verbindung mit der Ausgabeoptik 125, das Ausgabebild A vollständig erfasst wird. Dazu ist die Sensorfläche 132 beispielsweise so bemessen, dass austretendes Licht sämtlicher Fasern 112 des Lichtleiters 110 erfasst wird. Abweichend von dem gezeigten Beispiel ist in anderen Beispielen der Vorrichtung 100 keine Ausgabeoptik 125 vorgesehen. In einigen Beispielen ist das ausgangsseitige Ende 116 des Lichtleiters 110 dabei in optischem Kontakt mit der Sensorfläche 132 angeordnet derart, dass mittels des Bildsensors 130 direkt eine am ausgangsseitigen Ende 116 des Lichtleiters 110 vorliegende Lichtverteilung erfasst wird.

Dabei liegt vorzugsweise keine eineindeutige Zuordnung jeder der Fasern 112 jeweils zu einem bestimmtem Sensorpunkt 134 vor. In einem solchen Fall würde eine Rekonstruktion des Eingangsbilds stattdessen vorteilhaft durch eine örtliche Vertauschung der Sensorpunktdaten erfolgen, die einer Umkehrung der örtlichen Vertauschung aufgrund der unsortierten Fasern des Lichtleiters entspricht.

Wie in Fig. 1B schematisch dargestellt, weist der Lichtleiter 110 typischerweise einen im Wesentlichen runden Querschnitt auf, einschließlich im Wesentlichen runder Stirnflächen an dem eingangsseitigen Ende 114 und dem ausgangsseitigen Ende 116. Eine solche Form ist für die Herstellung eines Lichtleiters üblicherweise am wenigsten aufwendig. In anderen Beispielen kann wenigstens eine der Stirnflächen des Lichtleiters 110 an dem eingangsseitigen Ende 114 und/oder dem ausgangsseitigen Ende 116 eine davon abweichende Form, beispielsweise eine rechteckige oder sechseckige Form, aufweisen. Dabei ist die ausgangsseitige Stirnfläche beispielsweise so geformt, dass der Bildsensor 130 die Stirnfläche des ausgangsseitigen Endes 116 vollständig erfasst und dabei gleichzeitig ein möglichst großer Anteil von Sensorpunkten der Sensorfläche 132 genutzt wird. Bei einem runden Faserbündel und einer quadratischen Sensorfläche sind geometrisch bedingt nur etwa 78,5 % der Sensorpunkte nutzbar. Bei einem runden Faserbündel und einer rechteckigen Sensorfläche mit einem Seitenverhältnis von 3:2 sind sogar nur etwa 52,4 % der Sensorpunkte nutzbar. Durch eine Anpassung der Form der Stirnfläche(n) lässt sich der Anteil nutzbarer Sensorpunkte dagegen auf über 90% steigern.

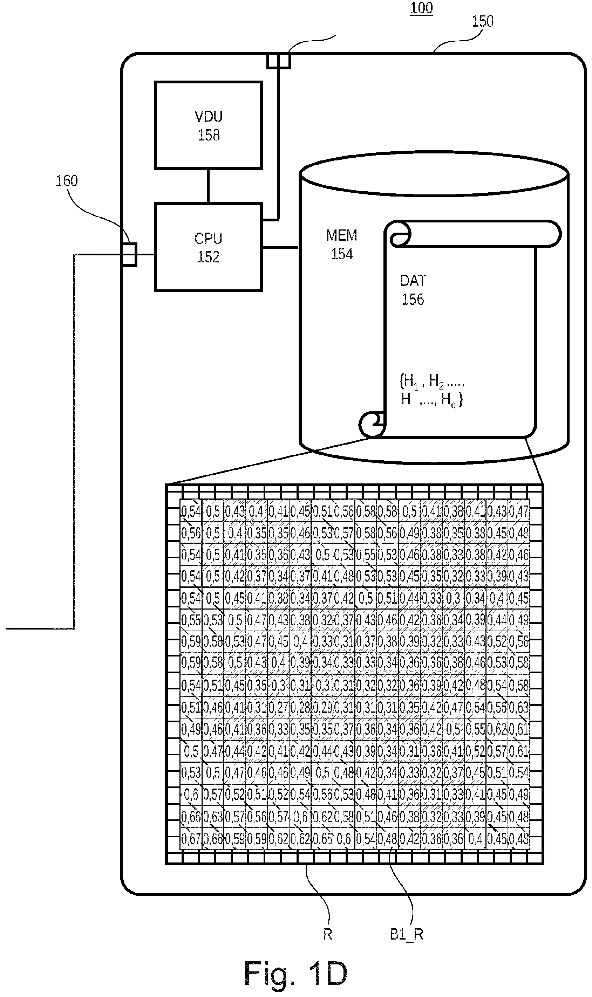

Die Vorrichtung 100 umfasst in dem gezeigten Beispiel ferner eine Verarbeitungseinrichtung 150, wie in Fig. 1D gezeigt. Die Darstellung in Fig. 1D entspricht dabei einer Verlängerung der Darstellung von Fig. 1C am rechten Bildrand. Die Verarbeitungseinrichtung 150 umfasst eine programmierbare Prozessoreinheit 152 und eine Speichervorrichtung 154, die mit der Prozessoreinheit 152 operativ verbunden ist. Die Verarbeitungseinrichtung 150 umfasst zudem eine Eingangsschnittstelle 160.

Der Bildsensor 130 ist mit der Verarbeitungseinrichtung 150 über die Eingangsschnittstelle 160 der Verarbeitungsvorrichtung 150 kommunikativ verbunden. Der Bildsensor 130 ist dabei dazu ausgebildet, bei Erfassen des Ausgabebilds A entsprechende Sensorinformation an die Verarbeitungsvorrichtung 150 zur Verarbeitung mittels der Prozessoreinheit (Central Processing Unit, CPU) 152 auszugeben. Dies ist in Fig. 1C und 1D durch die ausgehende Linie am rechten Bildrand von Fig. 1C sowie die eintretende Linie am linken Bildrand von Fig. 1D schematisch dargestellt.

Die Prozessoreinheit 152 ist dazu konfiguriert, auf der Grundlage der empfangenen Sensorinformation des Bildsensors 130 bezüglich des Ausgabebilds A das Eingangsbild E iterativ zu rekonstruieren, wie nachstehend näher ausgeführt. Dabei ist die Verarbeitungseinrichtung 150 ferner dazu ausgebildet, das Rekonstruktionsbild R als Datenobjekt 156 in einem Datenformat zu speichern und/oder auszugeben, das eine bildliche Darstellung und/oder Speicherung des Rekonstruktionsbilds R gestattet.

In dem gezeigten Beispiel ist die Verarbeitungseinrichtung 150 dazu ausgebildet, das Datenobjekt 156 mittels der Speichervorrichtung 154 zu speichern. Ferner umfasst die Verarbeitungseinrichtung 150 in dem gezeigten Beispiel eine Anzeigeeinheit 158 (Video Display Unit, VDU) und eine Ausgangsschnittstelle 162. Die Verarbeitungseinrichtung 150 ist dabei dazu ausgebildet, das Rekonstruktionsbild R mittels der Anzeigeeinheit 158 grafisch auszugeben und/oder das Rekonstruktionsbild R in Form des Datenobjekts 156 oder in Form eines beliebigen anderen zur Ausgabe und/oder Speicherung des Rekonstruktionsbilds R geeigneten Datenformats mittels der Ausgabeschnittstelle 162 an ein weiteres Ausgabe- und/oder Verarbeitungsgerät auszugeben.

In dem Beispiel von Fig. 1B umfassen die Fasern 112 in dem Lichtleiter 110 eine Anzahl r. Zudem umfassen die Sensorpunkte 134 des Bildsensors 130, mittels deren das Ausgabebild A erfasst wird, eine Anzahl s. Das Eingangsbild E ist in Fig. 1A zudem in eine Mehrzahl von Eingangsbildgebieten EG unterteilt, deren Bedeutung aus der nachstehenden Beschreibung deutlich werden wird.

In Fig. 1A ist im Bereich des Eingangsbilds E ein Beispiel-Eingangsbild B1_E gezeigt. Das Motiv des Beispiel-Eingangsbilds B1_E ist dabei willkürlich gewählt. Zur Veranschaulichung des vorgestellten Verfahrens besteht das Beispiel-Eingangsbild B1_E aus einem quadratischen Raster aus (hier vereinfachend angenommen) 16 mal 16 Eingangsbildgebieten EG. Jedem Eingangsbildgebiet ist dabei beispielhaft ein Helligkeitswert zwischen 0, entsprechend minimaler Helligkeit, und 1, entsprechend maximaler Helligkeit, zugeordnet. Die jeweilige Helligkeit ist dabei zudem durch eine entsprechende Schraffur jedes Eingangsbildgebiets angedeutet.

Die Projektion des Beispiel-Eingangsbilds B1_E auf das eingangsseitige Ende 114 des Lichtleiters 110 mittels der Eingangsoptik 120 fällt in dem Beispiel auf 100 Fasern 112 des Lichtleiters 110. Dies ist in Fig. 1B durch das eingekoppelte Bild B1_L des Beispiel-Eingangsbilds B1_E dargestellt, wobei das eingekoppelte Bild B1_L nun aus einem Raster von (hier vereinfachend angenommen) 10 mal 10 Bildgebieten besteht, von denen jedes wiederum der in einer einzelnen Faser 112 übertragenen Lichtinformation entspricht. In Fortsetzung des Beispiels aus Fig. 1A ist dabei jeder Faser 112 für die darin jeweils übertragene Lichtinformation ein Helligkeitswert zwischen 0 und 1 zugeordnet. Zudem ist das jeweilige Bildgebiet mit einer entsprechenden Schraffur versehen.

Gegenüber dem Beispiel-Eingangsbilds B1_E bewirkt die Einkopplung in den Lichtleiter 110, wie in dem Beispiel gezeigt, eine Verringerung bzw. eine Rasterung der ursprünglichen Bildinformation gemäß der Anzahl von Fasern 112, mittels deren die Bestandteile des Beispiel-Eingangsbilds B1_E in dem Lichtleiter 110 übertragen werden.

Im Bereich der Sensorfläche 132 wird in dem gezeigten Beispiel das aus dem Lichtleiter 110 austretende Beispiel-Ausgabebild B1_A von einem Raster aus (hier vereinfachend angenommen) 16 mal 16 Sensorpixeln erfasst. Dabei fällt das aus einer Faser 112 des Lichtleiters 110 jeweils austretende Licht typischerweise zu verschiedenen Anteilen auf mehrere Sensorpunkte 134 des Bildsensors 130. Die jeweiligen Sensorpunkte und Anteile ergeben sich dabei insbesondere aus einer Position der jeweiligen Faser 112 in der Anordnung der Fasern 112 am ausgangsseitigen Ende 116 des Lichtleiters 110. Gleichzeitig erfolgt dabei typischerweise an jedem der Sensorpunkte 134 eine Vermischung von Licht, das durch verschiedene der Fasern 112 übertragen wird. Das an einem Sensorpunkt 134 jeweils gemischte Licht aus verschiedenen Fasern 112 korreliert dabei nicht, bzw. nur in Ausnahmefällen gemäß der unsortierten Anordnung der Fasern 112 über den Verlauf des Lichtleiters 110, mit einer örtlichen Beziehung derselben Fasern am eingangsseitigen Ende 114 des Lichtleiters 110, entsprechend verschiedenen Bereichen des Beispiel-Eingangsbilds B1_E.

In Fortsetzung des Beispiels aus Fig. 1A und 1B ist in dem Beispiel-Ausgabebild B1_A dem Gebiet jedes Sensorpunkts 134 ein Helligkeitswert zwischen 0 und 1 gemäß der jeweils erfassten Helligkeit zugeordnet. Dabei ist das jeweilige Gebiet wieder mit einer entsprechenden Schraffur versehen. Durch Vergleichen mit dem Beispiel-Eingangsbild B1_E und dem in den Lichtleiter 110 eingekoppelten Bild B1_L ist anhand der Schraffuren erkennbar, dass eine Bildkontur, die in dem Beispiel-Eingangsbild B1_E enthalten ist, bei Austritt aus dem Lichtleiter 110 wegen des unsortierten Verlaufs der Fasern 112 innerhalb des Lichtleiters 110 in dem Beispiel-Ausgabebild B1_A nicht mehr erhalten ist.

Anwendung des Verfahrens zur iterativen Rekonstruktion des Beispiel-Eingangsbilds B1_E mittels der Verarbeitungseinrichtung 150 auf der Grundlage des erfassten Beispiel-Ausgabebilds B1_A, wie nachstehend beschrieben, ergibt das Beispiel-Rekonstruktionsbild B1_R. Wie in Fig. 1D erkennbar, ist in dem Beispiel-Rekonstruktionsbild B1_R eine örtliche Beziehung verschiedener Helligkeitswerte, die im Beispiel-Eingangsbild B1_E enthalten ist, weitgehend rekonstruiert. Insbesondere eine in dem Beispiel-Eingangsbild B1_E enthaltene Bildkontur ist in dem Beispiel-Rekonstruktionsbild B1_R wieder erkennbar.

Das nachstehend beschriebene Verfahren beruht auf einigen Annahmen. Dabei ist angenommen, dass Licht, das durch eine der Fasern 112-1 - 112r transportiert wird und am ausgangsseitigen Ende 116 des Lichtleiters 110 austritt, typischerweise auf mehrere der Sensorpunkte 134-1 - 134-s fällt, wobei zudem auf verschiedene Sensorpunkte 134-1 - 134-s verschieden große Anteile des aus der jeweiligen Faser austretenden Lichts fallen können. Zudem wird angenommen, dass eine relative Ausrichtung des Lichtleiters 110 und des Bildsensors 130 während eines Kalibrierungsverfahrens, wie nachfolgend beschrieben, und der Erfassung des Eingangsbilds E unverändert bleibt.

Nach Durchführung des Kalibrierungsverfahrens sind in einigen Beispielen der Vorrichtung 100 die entsprechenden Kalibrierungsdaten in einem Informationsträger 140 der Vorrichtung 100 speicherbar. Dabei handelt es sich beispielsweise um einen elektronischen Datenträger oder eine Identifikationsnummer der Vorrichtung 100, die einen Zugriff auf vorrichtungsspezifische Kalibrierungsdaten der Vorrichtung 100 gestattet, wobei die Kalibrierungsdaten beispielsweise in einer Datenbank des Herstellers der Vorrichtung 100 gespeichert sind.

Zur Kalibrierung wird der erfassbare Bildbereich des Eingangsbilds E in eine Mehrzahl von Eingangsbildgebieten EG-1 - EG-q unterteilt. Anschließend wird nacheinander in jedem der Eingangsbildgebiete EG eine Lichtquelle, beispielsweise eine Punktlichtquelle in Form eines Anzeigepixels, aktiviert. Die Abmessung der Lichtquelle ragt dabei idealerweise nicht über die Begrenzung des jeweiligen Eingangsbildgebiets EG hinaus. Das Licht aus dem jeweiligen Eingangsbildgebiet wird auf einen zusammenhängenden Bereich des eingangsseitigen Endes 114 des Lichtleiters 110 projiziert, wobei das Licht typischerweise anteilig in mehrere benachbart angeordnete Fasern 112-1 - 112r des Lichtleiters eingekoppelt wird. Aufgrund der unsortierten Anordnung der Fasern 112 über den Verlauf des Lichtleiters 110 treten die jeweiligen Fasern an verschiedenen und typischerweise nichtzusammenhängenden Stellen des ausgangsseitigen Endes 116 des Lichtleiters 110 aus. Infolgedessen fällt das Licht der Lichtquelle mit unterschiedlicher Proportionalität auf verschiedene, beliebig positionierte Sensorpunkte 134-1 - 134-s des Bildsensors 130. Zudem überlagert sich auf einem gegebenen Sensorpunkt 134-1 - 134-s typischerweise Licht, das an verschiedenen Eingangsbildgebieten EG-1 - EQ-q ausgesendet wird, in ungeordneter Weise.

Für jedes Eingangsbildgebiet EG-1 - EG-q ergibt sich auf die beschriebene Weise eine Proportionalität, mit der Licht aus dem jeweiligen Eingangsbildgebiet im Vergleich zu Licht aus den anderen Eingangsbildgebieten auf jedweden einzelner der Sensorpunkte 134-1 - 134-s trifft.

Das beschriebene Verfahren gestattet so die Bestimmung von Proportionalitäts- bzw. Gewichtungsfaktoren $w_{ij}$ für jeden der Sensorpunkte 134-1 - 134-s mit Bezug auf jedes der Eingangsbildgebiete EG-1 - EG-q. Die so bestimmten Gewichtungsfaktoren $w_{ij}$ stellen Kalibrierungsdaten für die Vorrichtung 100 dar.

Ein an einem einzelnen Sensorpunkt 134-j gemessener Helligkeitswert $M_j$ setzt sich gemäß dem Voranstehenden als Überlagerung der um ihren jeweiligen Gewichtungsfaktor $w_{ij}$ für den jeweiligen Sensorpunkt multiplizierten Helligkeit $H_i$ in jedem der Eingangsbildgebiete EGi zusammen. Daraus ergibt sich beispielsweise für den Sensorpunkt 134-j:

$$M_j = w_{1j} * H_1 + w_{2j} * H_2 + \ldots + w_{qj} * H_q$$

Diese Gleichung lässt sich nach jedem der Eingangsbildgebiet-Helligkeitswerte $H_i$ unter Verwendung der erfassten Helligkeit $M_j$ an dem jeweiligen Sensorpunkt 134-j auflösen. Für eine anfängliche Anwendung zum Berechnen eines ersten Eingangsbildgebiet-Helligkeitswerts $H_i$ wird für die verbleibenden Eingangsbildgebiet-Helligkeitswerte $H_1$ - $H_q$ in der Gleichung jeweils ein Startwert angenommen. Dieser beträgt beispielsweise für alle Eingangsbildgebiet-Helligkeitswerte $H_1$ - $H_q$ einen identischen Helligkeitsmittelwert $\hat{H}$ des auf den Bildsensor 130 insgesamt fallenden Lichts. Der so berechnete Eingangsbildgebiet-Helligkeitswert $H_i'$ für das Eingangsbildgebiet EG-i dient bei einer nachfolgenden analogen Anwendung desselben Verfahrens, beispielsweise bei einem anderen Sensorpunkt 134-1 - 134-s, als Ersatz für den sonst ursprünglich auch für das Eingangsbildgebiet EG-i angenommenen Startwert $\hat{H}$. Jeder so berechnete Eingangsbildgebiet-Helligkeitswert ersetzt nachfolgend jeweils einen für das entsprechende Eingangsbildgebiet zuvor angenommenen oder zuvor berechneten Helligkeitswert.

Durch sukzessives Anwenden des Verfahrens kommt so in einigen Beispielen für die Ermittlung eines beliebigen Eingangsbildgebiet-Helligkeitswerts $H_i$ immer der zuletzt ermittelte Satz von Eingangsbildgebiet-Helligkeitswerten $H_1$ - $H_q$ zur Anwendung. Dies gestattet iterativ eine zunehmend genaue Bestimmung jedwedes Eingangsbildgebiet-Helligkeitswerts $H_i$. Insbesondere gestattet das Verfahren auch bei wiederholter Anwendung auf bereits ermittelte Eingangsbildgebiet-Helligkeitswerte $H_i$ eine Verbesserung, soweit wenigstens einer der dazu verwendeten Helligkeitswerte der übrigen Eingangsbildgebiete EG-1 - EG-q zwischenzeitlich gegenüber seinem Startwert oder seinem vorherigen Wert neu berechnet worden ist.

Um die Effizienz des Verfahrens zu steigern, ist in manchen Beispielen vorgesehen, den Satz an Gewichtungsfaktoren $w_{ij}$, die einem Sensorpunkt 134-j in Bezug auf verschiedene Eingangsbildgebiete EG-1 - EG-q zugeordnet sind, auf solche Gewichtungsfaktoren zu beschränken, deren zugeordnete Eingangsbildgebiete mit wenigstens einer Schwellenwertproportionalität zu einer erfassten Helligkeit an dem Sensorpunkt 134-j beitragen. Auf diese Weise ist unnötiger Rechenaufwand vermeidbar, der sonst entsteht, wenn auch solche Eingangsbildgebiete EG-1 - EG-q bei der Berechnung berücksichtigt werden, deren Helligkeit wegen der Lage ihrer entsprechenden Fasern 112-1 - 112r nicht oder nur geringfügig zu einer erfassten Helligkeit an dem Sensorpunkt 134-j beitragen. Die verbleibenden Gewichtungsfaktoren $w_{ij}$ werden dabei anschließend beispielsweise normiert. Ein Ausschließen nicht oder nur geringfügig zur Helligkeit an einem bestimmten Sensorpunkt beitragender Eingangsbildgebiet-Helligkeitswerte EG-1 - EG-q aus der Berechnung gestattet in typischen Anwendungen eine Reduktion des Rechenaufwands um mehr als eine Größenordnung.

Um das Verfahren zu stabilisieren, ist in einigen Beispielen eine Dämpfung in der Berechnung der Eingangsbildgebiet-Helligkeitswerte vorgesehen. Die Dämpfung umfasst dabei beispielsweise eine Mittelung eines aktuell anhand der Gewichtungsfaktoren bestimmten Helligkeitswerts für ein Eingangsbildgebiet mit jeweils zuvor berechneten Helligkeitswerten für dasselbe Eingangsbildgebiet. In einigen Beispielen erfolgt außerdem oder stattdessen eine örtliche Glättung in der Berechnung eines Eingangsbildgebiet-Helligkeitswerts auf der Grundlage von einem oder mehreren Eingangsbildgebiet-Helligkeitswerten, die benachbarten Gebieten des jeweiligen Gebiets in dem Eingangsbild zugeordnet sind. Sowohl eine Dämpfung als auch eine Glättung können dabei jeweils mittels einer gewichteten Mittelung erfolgen. Die Dämpfungsgewichtung und die Mittelungsgewichtung können dabei jeweils während aufeinanderfolgender Durchführungen des Verfahrens für ein Eingangsbildgebiet, entsprechend aufeinander folgender Iterationen, konstant sein oder variieren.

Gemäß obiger Gleichung setzt sich der an einem jeweiligen Sensorpunkt 134-j gemessene Helligkeitswert $M_j$ üblicherweise als gewichtete Überlagerung der Helligkeiten in mehreren Eingangsbildgebieten zusammen. Analog dazu trägt umgekehrt eine Helligkeit in einem bestimmten Eingangsbildgebiet üblicherweise zu einem gemessenen Helligkeitswert an mehreren Sensorpunkten bei. Gemäß der obigen Gleichung lässt sich damit ausgehend von jedem der betreffenden Sensorpunkte eine Helligkeit desselben Eingangsbildgebiets bestimmen. In einigen Beispielen ist daher vorgesehen, zum Berechnen des Eingangsbildgebiet-Helligkeitswerts eine Helligkeit des Eingangsbildgebiets jeweils ausgehend von verschiedenen Sensorpunkten gemäß dem oben beschriebenen Vorgehen zu bestimmen und den Eingangsbildgebiet-Helligkeitswert ferner durch anschließende Mittelung der so bestimmten Helligkeiten zu berechnen. Die Mittelung erfolgt in einigen Beispielen als gewichtete Mittelung. Die gewichtete Mittelung erfolgt beispielsweise wenigstens teilweise auf der Grundlage der Gewichtungsfaktoren, die dem Eingangsbildgebiet in Bezug auf die verschiedenen Sensorpunkte zugeordnet sind.

In einigen Beispiele erfolgt zudem das Ersetzen von Eingangsbildgebiet-Helligkeitswerten durch die jeweils berechneten Eingangsbildgebiet-Helligkeitswerte erst dann, wenn für jedes Gebiet des Eingangsbilds E ein Eingangsbildgebiet-Helligkeitswert auf eine der beschriebenen Weisen berechnet worden ist, gemäß einem Iterationszyklus des Verfahrens, der das gesamte Eingangsbild E umfasst. Ein sequenzielles Anwenden des Verfahrens umfasst dabei beispielsweise eine wiederholte Durchführung des Verfahrens für alle Gebiete des Eingangsbilds. Dabei entspricht jeder Iterationszyklus des Verfahrens demnach einer Neuberechnung des gesamten Eingangsbilds E jeweils ausgehend von einer vorherigen rekonstruierten Version des Eingangsbilds E.

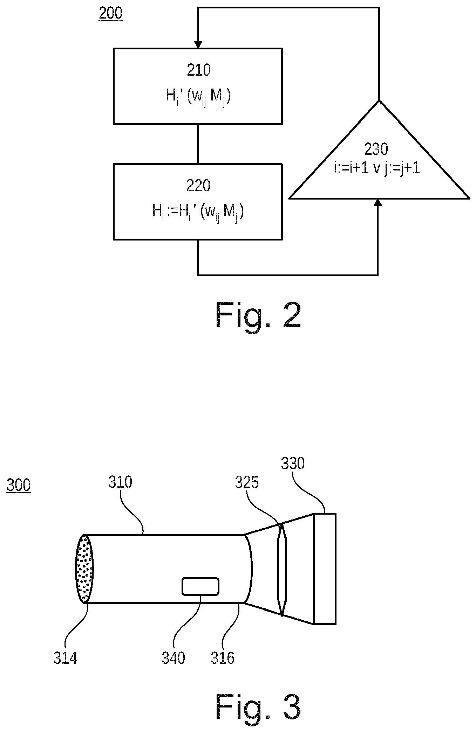

Fig. 2 zeigt schematisch ein Flussdiagramm eines Verfahrens 200 zum iterativen Rekonstruieren eines Eingangsbilds aus einem Ausgabebild, wie voranstehend im Zusammenhang mit Fig. 1A bis 1D beschrieben. Das Verfahren 200 umfasst das Berechnen eines Eingangsbildgebiet-Helligkeitswerts $H_i'$ auf der Grundlage eines Sensorpunkt-Helligkeitswerts $M_j$ des Ausgabebilds A, der an dem j-ten Sensorpunkt 134-j des Bildsensors 130 erfasst wird, und einem Gewichtungsfaktor $w_{ij}$, der dem i-ten Gebiet EG-i des Eingangsbilds E in Bezug auf den j-ten Sensorpunkt 134-j zugeordnet ist, Schritt 210. Das Berechnen erfolgt dabei zudem unter Verwendung wenigstens eines weiteren Eingangsbildgebiet-Helligkeitswert, der einem weiteren Gebiet des Eingangsbilds E zugeordnet ist und der mit einem weiteren Gewichtungsfaktor, der dem weiteren Gebiet des Eingangsbilds E in Bezug auf den j-ten Sensorpunkt 134-j zugeordnet ist, gewichtet ist, wie voranstehend beschrieben.

Das Verfahren 200 umfasst zudem ein Ersetzen eines dem i-ten Gebiet EG-i des Eingangsbilds E zugeordneten i-ten Eingangsbildgebiet-Helligkeitswerts $H_i$ durch den berechneten Eingangsbildgebiet-Helligkeitswert $H_i'$ zur Verwendung als fortan i-ter Eingangsbildgebiet-Helligkeitswert $H_i$, wie voranstehend beschrieben, Schritt 220.

Das Verfahren 200 umfasst anschließend ein sequenzielles Anwenden der vorgenannten Verfahrensschritte eines Berechnens, Schritt 210, und eines Ersetzens, Schritt 220, auf jedweden Sensorpunkt-Helligkeitswert $M_1$ - $M_s$, der einem beliebigen Sensorpunkt 134-1 - 134-s des Bildsensors 130 zugeordnet ist, sowie für jedweden Gewichtungsfaktor $w_{11}$ - $w_{qs}$, der einem beliebigen Gebiet EG-1 - EG-q des Eingangsbilds E in Bezug auf den jeweiligen Sensorpunkt 134-1 - 134-s des Bildsensors 130 zugeordnet ist, wie voranstehend beschrieben, Schritt 230.

Das sequenzielle Anwenden, Schritt 230, ist bei verschiedenen Beispielen des Verfahrens 200 verschieden implementierbar. Beispielsweise ist eine Reihenfolge des Anwendens für verschiedene Eingangsbildgebiete EG wenigstens teilweise durch eine aufsteigende Nummerierung der Eingangsbildgebiete EG bestimmt, wobei die Nummerierung durch eine Anordnung der Eingangsbildgebiete EG in dem Eingangsbild E bestimmt ist. Zusätzlich oder alternativ ist in einigen Beispielen eine Reihenfolge des Anwendens für verschiedene Gewichtungsfaktoren w, die einem bestimmten Sensorpunkt 134 zugeordnet sind, ebenfalls wenigstens teilweise durch eine aufsteigende Nummerierung der Eingangsbildgebiete EG bestimmt, wobei die Nummerierung durch eine Anordnung der Eingangsbildgebiete EG in dem Eingangsbild E bestimmt ist. In anderen Beispielen ist eine Reihenfolge bei dem sequenziellen Anwenden anders bestimmt.

Zudem ist in einigen Beispielen vorgesehen, das Verfahren 200 für wenigstens eine Gruppe von Eingangsbildgebiet-Helligkeitswerten mehrfach durchzuführen. Wiederholte Durchführung des Verfahrens bewirkt dabei, dass jeweils genauere Eingangsbildgebiet-Helligkeitswerte aus vorhergehenden Berechnungen für die erneute Berechnung eines weiteren Eingangsbildgebiet-Helligkeitswert verfügbar sind und herangezogen werden, was wiederum eine genauere Berechnung des weiteren Eingangsbildgebiet-Helligkeitswerts gestattet.

Fig. 3 zeigt schematisch und exemplarisch eine weitere Vorrichtung 300. Die Vorrichtung 300 umfasst einen Lichtleiter 310 mit einem eingangsseitigen Ende 314 und einem ausgangsseitigen Ende 316. Die Vorrichtung 310 umfasst ferner einen Bildsensor 330, der ausgangsseitig in Bezug auf den Lichtleiter 310 angeordnet ist, sowie eine Ausgangsoptik 325. Bezüglich dieser Merkmale der Vorrichtung 300 gilt das voranstehend mit Bezug auf die Vorrichtung 100 gesagte entsprechend. Die Vorrichtung 300 umfasst zudem einen Informationsträger 340. Der Informationsträger 340 enthält Daten, die für jeden einer Mehrzahl von Sensorpunkten des Bildsensors 330 auf eine Proportionalität hinweisen, mit der eine Helligkeit in jedwedem von verschiedenen Gebieten eines Eingangsbilds, das eingangsseitig in den Lichtleiter 310 einkoppelbar ist, zu einer erfassten Helligkeit eines entsprechenden Ausgabebilds im Bereich des jeweiligen Sensorpunkts beiträgt.

Der Informationsträger 340 enthält in einigen Beispielen die genannte Information explizit. Dabei ist der Informationsträger 340 beispielsweise als elektronisches Speichermedium, zum Beispiel als Speicherchip, RFID-Chip, ROM oder EPROM, ausgebildet, das von einem Benutzer der Vorrichtung 300 ausgelesen werden kann und zur Durchführung des Verfahrens der hier vorgestellten Art verwendet werden kann. In anderen Beispielen umfasst der Informationsträger 340 einen Strichoder QR-Code. In einigen Beispielen enthält der Informationsträger 340 Zugangsdaten zum Zugreifen auf eine Datenbank, in der die genannten Informationen gespeichert und wiederum für einen Benutzer der Vorrichtung 300 auslesbar sind.

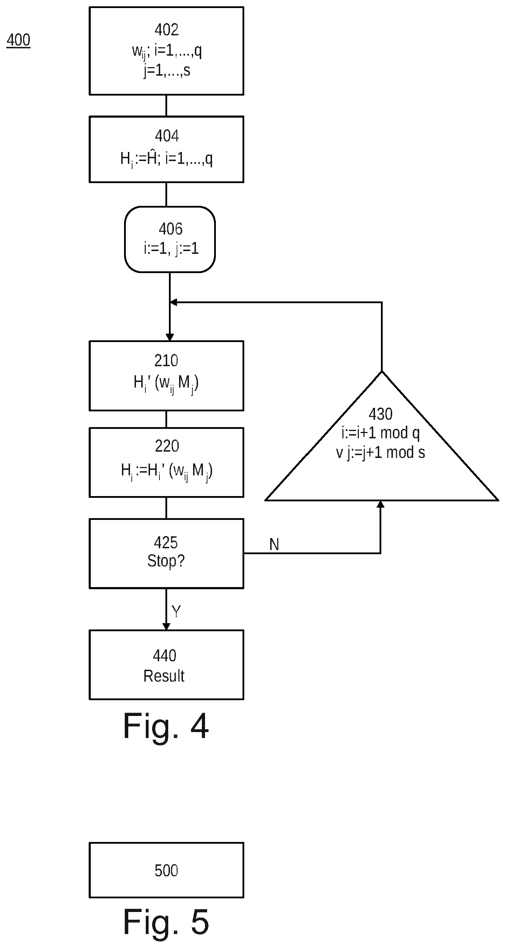

Fig. 4 zeigt ein Flussdiagramm für ein weiteres Verfahren 400. Das Verfahren 400 umfasst ebenfalls die Schritte eines Berechnens eines Eingangsbildgebiet-Helligkeitswerts, Schritt 210, und eines anschließenden Ersetzens eines Eingangsbildgebiet-Helligkeitswerts durch den berechneten Eingangsbildgebiet-Helligkeitswert, Schritt 220, als Teil eines wiederholt durchgeführten Verfahrensabschnitts. Bezüglich der Schritte 210 und 220 des Verfahrens 400 gilt das voranstehend zu den Schritten 210 und 220 des Verfahrens 200 Beschriebene entsprechend.

Das Verfahren 400 umfasst außerdem ein dem Schritt 210 vorangehendes Bestimmen der Gewichtungsfaktoren $w_i$, Schritt 402. Das Bestimmen der Gewichtungsfaktoren $w_{ij}$ erfolgt dabei beispielsweise mittels eines Kalibrierverfahrens, wie voranstehend mit Bezug auf Fig. 1A bis 1D beschrieben.

Das Verfahren 400 umfasst außerdem ein dem Schritt 210 vorangehendes Bestimmen eines Startwerts $\hat{H}_i$ für jeden Eingangsbildgebiet-Helligkeitswert $H_i$, Schritt 404. Der Startwert $\hat{H}$ ist dabei beispielsweise für jeden der Eingangsbildgebiet-Helligkeitswerte $H_i$ gleich gewählt. Beispielsweise entspricht der Startwert für jeden Eingangsbildgebiet-Helligkeitswert einem mittleren Helligkeitswert des erfassten Eingangsbilds E. In weiteren Beispielen sind verschiedene Startwerte $\hat{H}$ für verschiedene Eingangsbildgebiet-Helligkeitswerte $H_i$ gewählt, beispielsweise auf der Grundlage einer erwarteten Helligkeitsverteilung in dem Eingangsbild E, etwa auf der Grundlage wenigstens eines zuvor erfassten und/oder iterativ rekonstruierten Eingangsbilds E.

Das Verfahren 400 umfasst außerdem das Bestimmen eines Start-Sensorpunkts 134-j und eines Start-Eingangsbildgebiets i, in Bezug auf die das anschließende Berechnen, Schritt 210, als erstes angewendet wird, Schritt 406.

Das Verfahren 400 umfasst in Anschluss an das Anwenden eines Berechnens und Ersetzens, Schritte 210, 220, ein Prüfen, ob ein Abbruchkriterium für das wiederholte Anwenden der Schritte 210, 220 erfüllt ist, Schritt 425. Das Abbruchkriterium umfasst dabei beispielsweise ein Unterschreiten einer Schwellenwertdifferenz zwischen den Ergebnissen zweier iterativ durchgeführter Berechnungen eines Helligkeitswerts für dasselbe Eingangsbildgebiet EG. In weiteren Beispielen umfasst das Abbruchkriterium eine Schwellenwertanzahl von iterativen Durchführungen der Schritte 210 und 220 für jedwedes Eingangsbildgebiet EG und/oder in Bezug auf jeden Gewichtungsfaktor, der jeglichem der Eingangsbildgebiets EG in Bezug auf jedweden Sensorpunkt zugeordnet ist. In dem Fall, dass das Abbruchkriterium nicht erfüllt ist, wird das sequenzielle Anwenden der Schritte 210 und 220 fortgesetzt, N-Zweig in Fig. 4. Ist das Abbruchkriterium erfüllt, wird das sequenzielle Anwenden der Schritte 210 und 220 eingestellt, Y-Zweig in Fig. 4.

Ähnlich dem Verfahren 200 umfasst auch das Verfahren 400 ein sequenzielles Anwenden der Schritte 210 und 220 auf verschiedene Eingangsbildgebiet-Helligkeitswerte EG-i und/oder auf verschiedene Sensorpunkte 134-j, Schritt 430. In einigen Beispielen ist das sequenzielle Anwenden, Schritt 430, mit Blick auf das gewählte Abbruchkriterium, Schritt 425, gewählt. Dies umfasst beispielsweise eine Reihenfolge und/oder eine Häufigkeit, mit der die Indizes i und j, entsprechend verschiedenen Eingangsbildgebiet-Helligkeitswerten $H_i$ bzw. Sensorpunkt-Helligkeitswert $M_j$ variiert werden.

In dem Fall, dass in Schritt 425 ein Erfüllen des Abbruchkriteriums bestimmt worden ist, wird das bis dahin ermittelte Ergebnis an Eingangsbildgebiet-Helligkeitswerten $H_i$ als das rekonstruierte Eingangsbild E erachtet, Schritt 440. Dies umfasst beispielsweise ein Speichern und/oder ein Ausgeben des erzeugten Arrays aus Eingangsbildgebiet-Helligkeitswerten $H_i$ in Form einer Bilddatei.

Fig. 5 zeigt schematisch und exemplarisch ein Flussdiagramm einer Verwendung 500. Die Verwendung 500 umfasst das Verwenden eines Verfahrens, eines Computerprogrammprodukts und/oder einer Vorrichtung der vorliegend jeweils vorgestellten Art zum Rekonstruieren einer Mehrzahl von Eingangsbildern E in Echtzeit. Dabei sind die Eingangsbilder E im Zusammenhang einer Echtzeit-Bilderfassung in den Lichtleiter eingekoppelt.

In einigen Beispielen erfolgt die Verwendung zum Zweck einer Überwachung einer Bewegung und/oder einer Anzahl beweglicher Objekte, die mittels der Mehrzahl von Eingangsbildern E dargestellt sind.

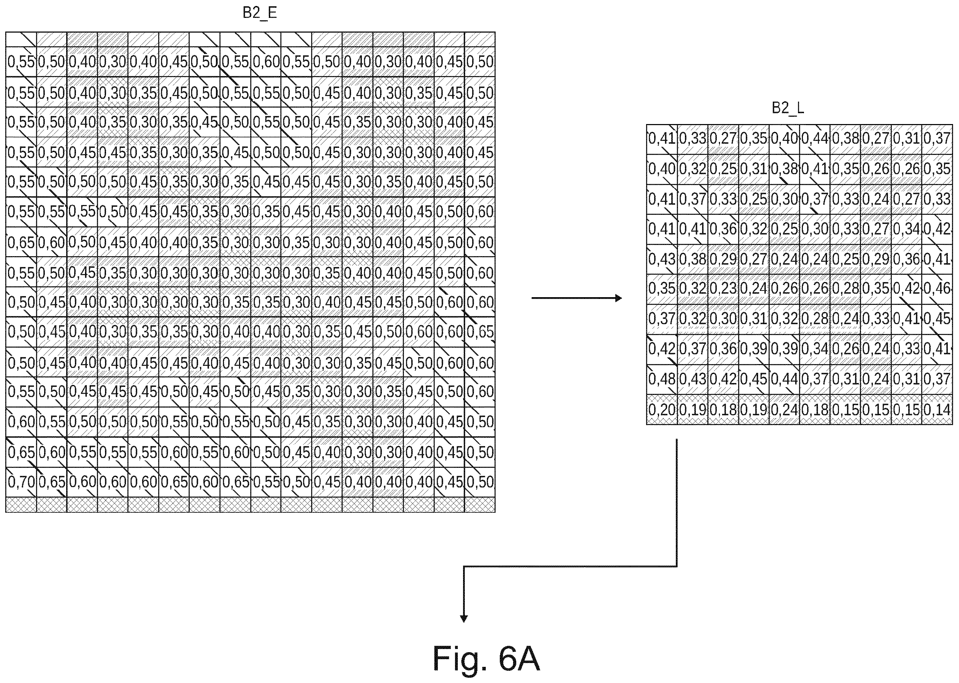

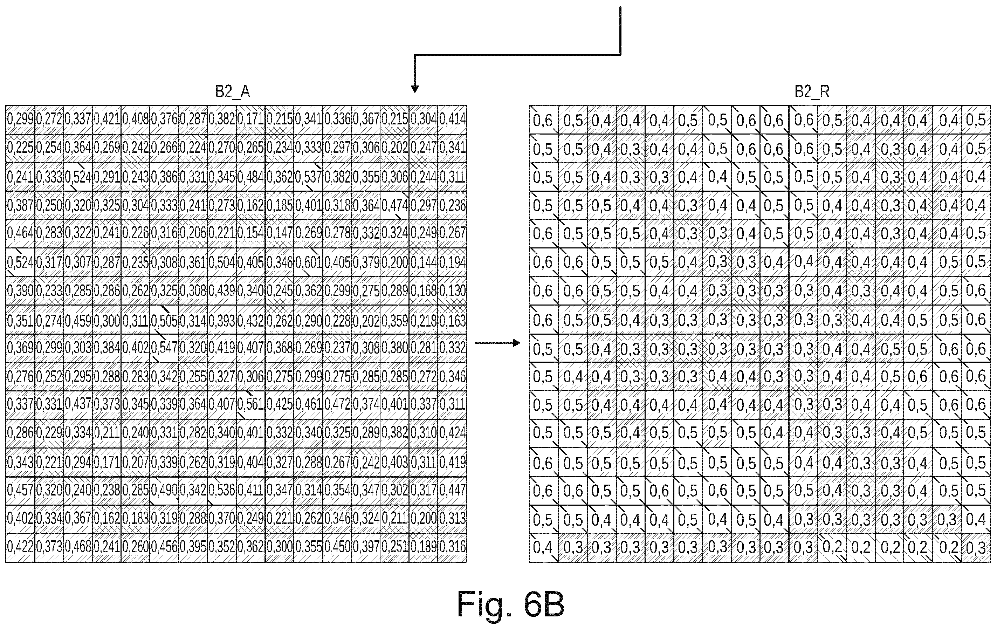

Fig. 6A und 6B zeigen ähnlich dem Beispiel in Fig. 1A bis 1D ein weiteres Beispiel für eine Abfolge eines Beispiel-Eingangsbilds B2_E sowie einer entsprechenden Beispiel-Einkopplung B2_L in ein Bündel aus (hier vereinfachend angenommen) 10 mal 10 Fasern eines Lichtleiters, eines entsprechenden Beispiel-Ausgabebilds B2_A und eines entsprechenden Beispiel-Rekonstruktionsbilds B2_R. Die Darstellung in Fig. 6B entspricht dabei einer Verlängerung der Darstellung von Fig. 6A am oberen Bildrand, wie durch den ausgehenden Pfeil am unteren Rand von Fig. 6A und den eintretenden Pfeil am oberen Rand von Fig. 6B angedeutet.

Das Motiv für das Beispiel in Fig. 6A und 6B entspricht im Wesentlichen dem Motiv in Fig. 1A bis 1D. Im Unterschied zu Fig. 1A ist das Beispiel-Eingangsbild B2_E in Fig. 6A jedoch gegenüber dem Raster um eine halbe Pixelhöhe nach oben verschoben. Dabei wurde der Bildüberstand von einem halben Pixel im oberen Bereich abgeschnitten und der Leerraum im unteren Bildbereich schwarz ausgefüllt.

Anwendung des beschriebenen Verfahrens auf das Beispiel-Eingangsbild B2_E zeigt anhand des Beispiel-Rekonstruktionsbilds B2_R die Stabilität des vorgestellten Verfahrens. Gleichzeitig ist, wie zu erwarten, teilweise ein Verschwimmen der scharfen Kontrastkante im unteren Bildbereich des Beispiel-Eingangsbilds B2_E sowohl infolge der Einkopplung B2_L in das Faserbündel als auch beim nachfolgenden nicht ganz vollständigen Entmischen B2_R des Ausgabebilds B2_A mittels des Verfahrens sichtbar.

Die voranstehend anhand von Fig. 1A bis 6B beschriebenen Beispiele beziehen sich allgemein auf das Erfassen und Berechnen von Helligkeiten bzw. einer Helligkeitsverteilung in einem Ausgabebild und einem Eingangsbild. Das entspricht beispielsweise einer Anwendung des Verfahrens im Zusammenhang mit Schwarz-weiß-Bildern bzw. Graustufen-Bildinformation. Das beschriebene Verfahren ist jedoch auch für Farbbilder bzw. mehrfarbige Bildinformation anwendbar. Dabei weist der Bildsensor 130 beispielsweise verschiedene Farbkanäle auf, und das beschriebene Verfahren wird für jeden der Farbkanäle, beispielsweise nach Farbkanälen getrennt, durchgeführt. Eine Rekonstruktion des Eingangsbilds umfasst in diesen Fällen beispielsweise außerdem ein anschließendes Zusammenführen der Resultate der Verfahrensdurchführungen für jeden der Farbkanäle.

Die beschriebenen Eigenschaften machen das vorgestellte Verfahren für Schwarz-weiß-Anwendungen, die keine sehr hohe Detailtreue verlangen, also bspw. weniger scharfe Details, hoher Kontrast, oder hohe Auflösung des ermittelten, rekonstruierten Bildes bedürfen, besonders vorteilhaft. Dazu gehören beispielsweise Überwachungsanwendungen bezüglich größerer Bewegungen in einer überwachten Umgebung oder bezüglich einer Anzahl von erfassten Objekten. Bei solchen Anwendungen kann mittels der vorgestellten Technik auf kostspielige Optiken, insbesondere aufwendig herzustellende Bildleiter, verzichtet werden. Es versteht sich zudem, dass, insbesondere abhängig von jeweils verfügbaren Rechenresourcen und Bilderfassungsmitteln, weitere vorteilhafte Anwendungen der hier vorgestellten Technik denkbar sind.

**Patentansprüche**

1. Verfahren (200; 400) zum iterativen Rekonstruieren eines Eingangsbilds (E) aus einem erfassten Ausgabebild (A), wobei das Ausgabebild (A) wenigstens teilweise durch Übertragen von Bestandteilen des Eingangsbilds (E) mittels eines Lichtleiters (110; 310), der wenigstens teilweise unsortierte Fasern (112) umfasst, erzeugt und mittels eines Bildsensors (130; 330), der eine Mehrzahl von Sensorpunkten (134) umfasst, erfasst ist, wobei das Verfahren umfasst:

 - Berechnen (210) eines Eingangsbildgebiet-Helligkeitswerts ($H_i'$) für ein erstes Gebiet (EG-i) des Eingangsbilds (E) wenigstens teilweise auf der Grundlage von:

   ◦ wenigstens einem ersten Sensorpunkt-Helligkeitswert ($M_j$), der einem ersten Sensorpunkt (134-j) des Bildsensors (130) zugeordnet ist und der auf eine erfasste Helligkeit des Ausgabebilds (A) im Bereich des ersten Sensorpunkts (134-j) hinweist,
   ◦ einem ersten Gewichtungsfaktor ($w_{ij}$), der dem ersten Gebiet (EG-i) des Eingangsbilds (E) in Bezug auf den ersten Sensorpunkt (134-j) zugeordnet ist, und
   ◦ wenigstens einem weiteren Eingangsbildgebiet-Helligkeitswert ($H_k$), der einem weiteren Gebiet (EG-k) des Eingangsbilds (E) zugeordnet ist und der mit einem weiteren Gewichtungsfaktor ($w_{kj}$), der dem weiteren Gebiet (EG-k) des Eingangsbilds (E) in Bezug auf den ersten Sensorpunkt (134-j) zugeordnet ist, gewichtet ist, und

- Ersetzen (220) eines dem ersten Gebiet (EG-i) des Eingangsbilds (E) zugeordneten ersten Eingangsbildgebiet-Helligkeitswerts ($H_i$) durch den berechneten Eingangsbildgebiet-Helligkeitswert ($H_i$') zur Verwendung als fortan erster Eingangsbildgebiet-Helligkeitswert ($H_i$), wobei die vorgenannten Verfahrensschritte eines Berechnens (210) und eines Ersetzens (220) sequenziell angewendet (230; 430) werden, und wobei das Verfahren ferner umfasst, vor einem ersten Berechnen (210) eines Eingangsbildgebiet-Helligkeitswerts ($H_1$ - $H_q$):

   - Bestimmen (402), für jeden der Mehrzahl von Sensorpunkten (134), eines Satzes von Gewichtungsfaktoren ($w_{1j}$ - $w_{qj}$), die jeweils einem verschiedenen Gebiet (EG-1 - EGq) des Eingangsbilds (E) in Bezug auf den jeweiligen Sensorpunkt (134-j) zugeordnet sind,

wobei das Bestimmen (402) des Satzes von Gewichtungsfaktoren ($w_{1j}$ - $w_{qj}$) wenigstens teilweise auf der Grundlage einer Proportionalität erfolgt, mit der eine Helligkeit in dem Gebiet (EG-1 - EG-q) des Eingangsbilds (E), dem ein jeweiliger Gewichtungsfaktor ($w_{1j}$ - $w_{qj}$) in Bezug auf den jeweiligen Sensorpunkt (134-j) zugeordnet ist, zu einer erfassten Helligkeit ($M_j$) des Ausgabebilds (A) im Bereich des Sensorpunkts (134-j) beiträgt, wobei die Proportionalität wenigstens teilweise bedingt ist durch eine Faseranordnung (112) des Lichtleiters (110; 310), und wobei das Bestimmen (402) des Satzes von Gewichtungsfaktoren ferner umfasst:

   ◦ Ermitteln, für jedes aus einer Mehrzahl von Gebieten (EG-1 - EG-q) des Eingangsbilds (E), einer Proportionalität, mit der eine Helligkeit in dem jeweiligen Gebiet (EG-1 - EG-q) des Eingangsbilds (E) zu einer erfassten Helligkeit ($M_j$) des Ausgabebilds (A) im Bereich des Sensorpunkts (134-j) beiträgt,
   ◦ Verwerfen von Gebieten (EG-1 - EG-q) des Eingangsbilds (E), bei denen die Proportionalität weniger als eine Schwellenwertproportionalität beträgt,
   ◦ Bestimmen eines Gewichtungsfaktors ($w_{1j}$ - $w_{qj}$) für jedes der verbleibenden Gebiete (EG-1 - EG-q) wenigstens teilweise auf der Grundlage der Proportionalität, die dem jeweiligen Gebiet (EG-1 - EG-q) zugeordnet ist, und
   ◦ Normalisieren der Gewichtungsfaktoren ($w_{1j}$ - $w_{qj}$).

2. Verfahren nach Anspruch 1, wobei die Verfahrensschritte eines Berechnens (210) und eines Ersetzens (220) sequenziell angewendet (230; 430) werden:

   - auf jeden von mehreren Sensorpunkt-Helligkeitswerten ($M_1$ - $M_s$), die verschiedenen Sensorpunkten (134-1 - 134-s) des Bildsensors (130; 330) zugeordnet sind, und/oder
   - für jedes von mehreren Gebieten (EG-1 - EG-q) des Eingangsbilds (E), und/oder
   - für jeden von ein oder mehreren Gewichtungsfaktoren ($w_{11}$ - $w_{qs}$), die jeweils einem beliebigen Gebiet (EG-1 - EG-q) des Eingangsbilds (E) in Bezug auf einen selben Sensorpunkt (134-1 - 134-s) des Bildsensors (130; 330) zugeordnet sind, oder
   - in Form einer wiederholten Durchführung zunächst des Berechnens (210) für jedes von mehreren Gebieten (EG-1 - EG-q) des Eingangsbilds (E) und anschließend des Ersetzens (220) der den mehreren Gebieten (EG-1 - EG-q) des Eingangsbilds (E) zugeordneten Eingangsbildgebiet-Helligkeitswerte ($H_1$ - $H_q$) durch die berechneten Eingangsbildgebiet-Helligkeitswerte ($H_1$'- $H_q$').

3. Verfahren nach Anspruch 1 oder Anspruch 2, wobei das sequenzielle Anwenden (230; 430) ein sequenzielles Anwenden der Verfahrensschritte eines Berechnens (210) und eines Ersetzens (220) auf jeden Sensorpunkt-Helligkeitswert ($M_1$ - $M_s$), der einem beliebigen Sensorpunkt (134-1 - 134-s) der Mehrzahl von Sensorpunkten (134) zugeordnet ist, und/oder für alle Gewichtungsfaktoren ($w_{1j}$ - $w_{qj}$), die jeweils einem beliebigen Gebiet (EG-1 - EG-q) des Eingangsbilds (E) in Bezug auf einen selben Sensorpunkt (134-j) des Bildsensors (130) zugeordnet sind,

**4.** Verfahren nach Anspruch 1 oder Anspruch 2, wobei das Berechnen (210) des Eingangsbildgebiet-Helligkeitswerts ($H_i'$) auf der Grundlage von mehreren Sensorpunkt-Helligkeitswerten ($M_1 - M_s$), die verschiedenen Sensorpunkten (134-1 - 134-s) des Bildsensors (130) zugeordnet sind und die jeweils auf eine erfasste Helligkeit des Ausgabebilds (A) im Bereich des jeweiligen Sensorpunkts (134-1 - 134-s) hinweisen, erfolgt,

wobei, optional, das Berechnen (210) für jeden der mehreren Sensorpunkt-Helligkeitswerte ($M_1 - M_s$) wenigstens teilweise auf der Grundlage von einem jeweils ersten Gewichtungsfaktor, der dem ersten Gebiet (EG-i) des Eingangsbilds (E) in Bezug auf den jeweiligen Sensorpunkt (134-1 - 134-s) zugeordnet ist, und wenigstens einem jeweils weiteren Eingangsbildgebiet-Helligkeitswert, der einem jeweils weiteren Gebiet des Eingangsbilds (E) zugeordnet ist und der mit einem jeweils weiteren Gewichtungsfaktor, der dem jeweils weiteren Gebiet des Eingangsbilds (E) in Bezug auf den jeweiligen Sensorpunkt (134-1 - 134-s) zugeordnet ist, gewichtet ist, erfolgt,
wobei, ferner optional, das Berechnen (210) für jeden der mehreren Sensorpunkt-Helligkeitswerte ($M_1 - M_s$) jeweils zum Bestimmen eines sensorpunktspezifischen Helligkeitswerts für das erste Gebiet (EG-i) des Eingangsbilds (E) erfolgt, und wobei das Berechnen des Eingangsbildgebiet-Helligkeitswerts ($H_i'$) auf der Grundlage der mehreren sensorpunktspezifischen Helligkeitswerte für das erste Gebiet (EG-i) des Eingangsbilds (E) erfolgt,
wobei, ferner optional, das Berechnen (210) des Eingangsbildgebiet-Helligkeitswerts ($H_i'$) auf der Grundlage der mehreren sensorpunktspezifischen Helligkeitswerte für das erste Gebiet (EG-i) ein Mitteln der mehreren sensorpunktspezifischen Helligkeitswerte für das erste Gebiet (EG-i) umfasst,
wobei, ferner optional, das Mitteln gemäß einer Gewichtung der mehreren sensorpunktspezifischen Helligkeitswerte für das erste Gebiet (EG-i) auf der Grundlage der Gewichtungsfaktoren ($w_{i1} - w_{is}$), die dem ersten Gebiet (EG-i) in Bezug auf die betreffenden Sensorpunkte (134-1 - 134-s) zugeordnet sind, erfolgt.

**5.** Verfahren nach Anspruch 4, wobei das sequenzielle Anwenden eine wiederholte Durchführung zunächst des Berechnens (210) für jedes von mehreren Gebieten (EG-1 - EGq) des Eingangsbilds (E) und anschließend des Ersetzens (220) der den mehreren Gebieten (EG-1 - EG-q) des Eingangsbilds (E) zugeordneten Eingangsbildgebiet-Helligkeitswerte ($H_1 - H_q$) durch die berechneten Eingangsbildgebiet-Helligkeitswerte ($H_1' - H_q'$) umfasst, wobei das Berechnen (210) zudem für jeden von ein oder mehreren Gewichtungsfaktoren ($w_{11} - w_{qs}$), die jeweils einem beliebigen Gebiet (EG-1 - EG-q) des Eingangsbilds (E) in Bezug auf einen selben Sensorpunkt (134-1 - 134-s) des Bildsensors (130; 330) zugeordnet sind, durchgeführt wird.

**6.** Verfahren nach einem der vorhergehenden Ansprüche, ferner umfassend:
wiederholtes Durchführen des sequenziellen Anwendens (230; 430), insbesondere bis zu einem Eintreten eines vorbestimmten Abbruchkriteriums (425)..

**7.** Verfahren nach einem der vorhergehenden Ansprüche, wobei das Berechnen (210) ferner wenigstens teilweise gemäß einer mathematischen Funktion erfolgt, mittels deren der erste Sensorpunkt-Helligkeitswert ($M_j$) in Beziehung gesetzt ist zu einer Summe der um ihren jeweiligen Gewichtungsfaktor ($w_{1j} - w_{qj}$) gewichteten Eingangsbildgebiet-Helligkeitswerte ($H_1 - H_q$), und/oder

ferner umfassend, vor einem ersten Berechnen (210) eines Eingangsbildgebiet-Helligkeitswerts ($H_1 - H_q$) zu einem erfassten Ausgabebild, Zuordnen (404) eines Helligkeits-Startwerts zu jedem Gebiet (EG-1 - EG-q) des Eingangsbilds (E) als der Eingangsbildgebiet-Helligkeitswert ($H_1 - H_q$) des jeweiligen Gebiets (EG-1 - EG-q), und/oder
wobei das Berechnen (210) ferner eine Dämpfung auf der Grundlage von einem oder mehreren zuvor berechneten Eingangsbildgebiet-Helligkeitswerten ($H_i$) des ersten Gebiets (EG-i) des Eingangsbilds (E) und/oder eine örtliche Glättung auf der Grundlage von einem oder mehreren Eingangsbildgebiet-Helligkeitswerten ($H_{i-1}$, $H_{i+1}$), die benachbarten Gebieten (EG-i-1, EG-i+1) des ersten Gebiets (EG-i) in dem Eingangsbild (E) zugeordnet sind, umfasst.

**8.** Verfahren nach einem der vorhergehenden Ansprüche, wobei die Mehrzahl von Sensorpunkten (134) in einer Sensorfläche (132) des Bildsensors (130; 330) angeordnet ist,
wobei, optional, die Mehrzahl von Sensorpunkten (134) bestimmt ist durch eine Gesamtzahl von Sensorpunkten des Bildsensors (130; 330) oder durch eine Untergruppe von Sensorpunkten des Bildsensors (130; 330), mittels deren das Ausgabebild (A) erfasst ist.

**9.** Verfahren nach einem der vorhergehenden Ansprüche, wobei der Bildsensor (130; 330) mehrere Farbkanäle aufweist und das sequenzielle Anwenden eines Berechnens (210) und eines Ersetzens (220) für jeden der mehreren Farbkanäle durchgeführt wird, und/oder

in Verbindung mit Anspruch 7, wobei das Bestimmen (402) der Sätze von Gewichtungsfaktoren ($w_{1j}$ - $w_{qj}$) für die mehreren Farbkanäle einheitlich oder für jeden der Farbkanäle getrennt erfolgt, und/oder

wobei der Lichtleiter (110; 310) und der Bildsensor (130; 330) derart hergerichtet sind, dass eine Anzahl (r) der Fasern (112) in dem Lichtleiter (130; 330) und eine Anzahl (s) der Sensorpunkte (134) des Bildsensors (130; 330), mittels deren das Ausgabebild (A) erfasst wird, um nicht mehr als das Zwanzigfache, vorzugsweise um nicht mehr als das Zehnfache, bevorzugt um nicht mehr als das Dreifache, der jeweils kleineren der beiden Anzahlen (r, s) voneinander verschieden sind.

10. Verfahren nach einem der vorhergehenden Ansprüche, wobei das Eingangsbild (E) einer optischen Projektion von wenigstens einem Bereich einer Umgebung entspricht, die wenigstens teilweise in den Lichtleiter (110; 330) eingekoppelt ist, und/oder ferner umfassend:
Speichern und/oder Ausgeben (440) der Eingangsbildgebiet-Helligkeitswerte ($H_1$ - $H_q$) in einem Datenformat (156), das geeignet ist, eine Rekonstruktion (R) des Eingangsbilds (E) zu speichern und/oder darzustellen.

11. Computerprogramm-Produkt umfassend Teile von Programmcode, die, wenn sie auf einer programmierbaren Computeranlage ausgeführt werden, die Computeranlage zum Durchführen des Verfahrens nach einem der vorhergehenden Ansprüche veranlassen.

12. Vorrichtung (100; 300) umfassend:

wenigstens einen Lichtleiter (110; 310), der wenigstens teilweise unsortierte Fasern (112) umfasst, und
wenigstens einen Bildsensor (130; 330), der eine Mehrzahl von Sensorpunkten (134) umfasst und dazu ausgebildet ist, ein Ausgabebild (A) zu erfassen, das wenigstens teilweise durch Übertragen von Bestandteilen eines Eingangsbilds (E) mittels des Lichtleiters (110; 310) erzeugt ist,
wenigstens einen Informationsträger (140; 340), der Daten enthält, die für jeden der Mehrzahl von Sensorpunkten (134) auf eine Proportionalität hinweisen, mit der eine Helligkeit in jedwedem von verschiedenen Gebieten (EG-1 - EG-q) des Eingangsbilds (E) zu einer erfassten Helligkeit ($M_j$) des Ausgabebilds (A) im Bereich des jeweiligen Sensorpunkts (134-j) beiträgt, und
eine Verarbeitungseinrichtung (150), die eine Prozessoreinheit (152) und eine Speichervorrichtung (154), die mit der Prozessoreinheit (152) operativ verbunden ist, umfasst, wobei die Prozessoreinheit (152) dazu konfiguriert ist, das Verfahren nach einem der Ansprüche 1 bis 10 durchzuführen.

13. Vorrichtung nach Anspruch 12, wobei der Lichtleiter (110; 310) und der Bildsensor (130; 330) derart hergerichtet sind, dass eine Anzahl (r) der Fasern (112) in dem Lichtleiter (110; 310) und eine Anzahl (s) der Sensorpunkte (134) des Bildsensors (130; 330), mittels deren das Ausgabebild (A) erfasst ist, um nicht mehr als das Zwanzigfache, vorzugsweise um nicht mehr als das Zehnfache, bevorzugt um nicht mehr als das Dreifache, der jeweils kleineren der beiden Anzahlen (r, s) voneinander verschieden sind.

14. Verwendung (500) eines Verfahrens nach einem der Ansprüche 1 bis 10, eines Computerprogrammprodukts nach Anspruch 11 und/oder einer Vorrichtung nach Anspruch 12 oder Anspruch 13 zum Rekonstruieren einer Mehrzahl von Eingangsbildern (E) in Echtzeit, wobei die Eingangsbilder (E) im Zusammenhang einer Echtzeit-Bilderfassung in den Lichtleiter (110; 310) eingekoppelt sind,
wobei, optional, die Verwendung zum Zweck einer Überwachung einer Bewegung und/oder einer Anzahl beweglicher Objekte, die mittels der Mehrzahl von Eingangsbildern (E) dargestellt sind, erfolgt.

**Claims**

1. Method (200; 400) for iteratively reconstructing an input image (E) from a captured output image (A), wherein the output image (A) is generated at least partially by transmitting components of the input image (E) by means of a light guide (110; 310) comprising at least partially unsorted fibers (112) and captured by an image sensor (130; 330) comprising a plurality of sensor points (134), wherein the method comprises:
calculating (210) an input image region brightness value ($H_i'$) for a first region (EG-i) of the input image (E) at least partially based on:

at least one first sensor point brightness value ($M_j$) associated with a first sensor point (134-j) of the image sensor (130) and indicating a detected brightness of the output image (A) in the area of the first sensor point (134-j);

a first weighting factor ($w_{ij}$) associated with the first region (EG-i) of the input image (E) with respect to the first sensor point (134-j); and
at least one further input image region brightness value ($H_k$) that is assigned to a further region (EG-k) of the input image (E) and is weighted with a further weighting factor ($w_{kj}$) that is assigned to the further region (EG-k) of the input image (E) with respect to the first sensor point (134-j); and

replacing (220) a first input image region brightness value ($H_i$) assigned to the first region (EG-i) of the input image (E) with the calculated input image region brightness value ($H_i'$) for use as the first input image region brightness value ($H_i$) from then on, wherein the aforementioned method steps of calculating (210) and replacing (220) are applied sequentially (230; 430), and wherein the method further comprises, prior to a first calculation (210) of an input image region brightness value ($H_1$ - $H_q$):

determining (402), for each of the plurality of sensor points (134), a set of weighting factors ($w_{1j}$ - $w_{qj}$) that are each associated with a different region (EG-1 - EG-q) of the input image (E) with respect to the respective sensor point (134-j), wherein the determination (402) of the set of weighting factors ($w1_j$ - $w_{qj}$) is implemented based at least in part on a proportionality with which a brightness in the region (EG-1 - EG-q) of the input image (E) to which a respective weighting factor ($w1_j$ - $w_{qj}$) is assigned with respect to the respective sensor point (134-j) contributes to a detected brightness ($M_j$) of the output image (A) in the area of the sensor point (134-j), wherein the proportionality being at least partially determined by a fiber arrangement (112) of the light guide (110; 310), and wherein the determination (402) of the set of weighting factors further comprises:

determining, for each of a plurality of regions (EG-1 - EG-q) of the input image (E), a proportionality with which a brightness in the respective region (EG-1 - EG-q) of the input image (E) contributes to a detected brightness ($M_j$) of the output image (A) in the area of the sensor point (134-j);

discarding regions (EG-1 - EG-q) of the input image (E) for which the proportionality is less than a threshold proportionality;
determining a weighting factor ($w1_j$ - $w_{qj}$) for each of the remaining regions (EG-1 - EG-q) at least in part on the basis of the proportionality associated with the respective region (EG-1 - EG-q); and

normalizing the weighting factors ($w_{1j}$ - $w_{qi}$).

2. Method according to claim 1, wherein the method steps of calculating (210) and replacing (220) are applied sequentially (230; 430):

to each of a plurality of sensor point brightness values ($M_1$ - $M_s$) associated with different sensor points (134-1 - 134-s) of the image sensor (130; 330); and/or
for each of a plurality of regions (EG-1 - EG-q) of the input image (E); and/or
for each of one or more weighting factors ($w_{11}$ - $w_{qs}$), each of which is associated with an arbitrary region (EG-1 - EG-q) of the input image (E) with respect to the same sensor point (134-1 - 134-s) of the image sensor (130; 330); or
in the form of a repeated execution, first of calculating (210) for each of a plurality of regions (EG-1 - EG-q) of the input image (E) and then of replacing (220) the input image region brightness values ($H_1'$- $H_q'$) assigned to the multiple regions (EG-1 - EG-q) of the input image (E) with the calculated input image region brightness values ($H_1'$ - $H_q'$).

3. Method according to claim 1 or claim 2, wherein the sequential application (230; 430) is a sequential application of the method steps of calculating (210) and replacing (220) to each sensor point brightness value ($M_1$ - $M_s$) associated with an arbitrary sensor point (134-1 - 134-s) of the plurality of sensor points (134) and/or for all weighting factors ($w_{1j}$ - $w_{qj}$) each associated with an arbitrary region (EG-1 - EG-q) of the input image (E) with respect to the same sensor point (134-j) of the image sensor (130).

4. Method according to claim 1 or claim 2, wherein

the calculation (210) of the input image region brightness value ($H_i'$) is implemented based on a plurality of sensor point brightness values ($M_1$ - $M_s$) assigned to different sensor points (134-1 - 134-s) of the image sensor (130) and each of which indicates a detected brightness of the output image (A) in the area of the respective sensor point (134-1 - 134-s),
wherein optionally the calculation (210) for each of the plurality of sensor point brightness values ($M_1$ - $M_s$) is implemented at least partially on the basis of a respective first weighting factor that is associated with the first region (EG-i) of the input image (E) with respect to the respective sensor point (134-1 - 134-s) and at least one respective further input image region brightness value that is assigned to a respective further region of the input image (E) and that is weighted with a respective further weighting factor that is assigned to the respective further region of the input image (E) with respect to the respective sensor point (134-1 - 134-s),
wherein further optionally the calculation (210) is implemented for each of the plurality of sensor point brightness values ($M_1$ - $M_s$) respectively in order to determine a sensor point-specific brightness value for the first region (EG-i) of the input image (E), and wherein the calculation of the input image region brightness value ($H_i'$) is implemented on the basis of the plurality of sensor point-specific brightness values for the first region (EG-i) of the input image (E),
wherein further optionally the calculation (210) of the input image region brightness value ($H_i'$) based on the plurality of sensor point-specific brightness values for the first region (EG-i) comprises averaging the plurality of sensor point-specific brightness values for the first region (EG-i), and
wherein further optionally the averaging is performed according to a weighting of the plurality of sensor point-specific brightness values for the first region (EG-i) based on the weighting factors ($w_{i1}$ - $w_{is}$) associated with the first region (EG-i) with respect to the respective sensor points (134-1 - 134-s).

5. Method according to claim 4, wherein the sequential application comprises repeatedly performing first the calculation (210) for each of a plurality of regions (EG-1 - EGq) of the input image (E) and then the replacement (220) of the input image region brightness values ($H_1$ - $H_q$) associated with the plurality of regions (EG-1 - EG-q) of the input image (E) with the calculated input image region brightness values ($H_1'$ - $H_q'$), wherein the calculating (210), moreover, is performed for each of one or more weighting factors ($w_{11}$ - $w_{qs}$) each associated with an arbitrary region (EG-1 - EG-q) of the input image (E) with respect to a same sensor point (134-1 - 134-s) of the image sensor (130; 330).

6. Method according to any one of the preceding claims, further comprising:
repeatedly performing the sequential application (230; 430), in particular until a predetermined termination criterion (425) is met.

7. Method according to any one of the preceding claims, wherein

the calculation (210) is further performed at least in part according to a mathematical function by means of which the first sensor point brightness value ($M_j$) is related to a sum of the input image region brightness values ($H_1$ - $H_q$) weighted by their respective weighting factors ($w_{1j}$ - $w_{qj}$); and/or
further comprising, prior to a first calculation (210) of an input image region brightness value ($H_1$ - $H_q$) for a captured output image, assigning (404) a brightness start value to each region (EG-1 - EG-q) of the input image (E) as the input image region brightness value ($H_1$ - $H_q$) of the respective region (EG-1 - EG-q), and/or
wherein the calculation (210) further includes an attenuation based on one or more previously calculated input image region brightness values ($H_i$) of the first region (EG-i) of the input image (E) and/or local smoothing based on one or more input image region brightness values ($H_{i-1}$, $H_{i+1}$) associated with adjacent regions (EG-i-1, EG-i+1) of the first region (EG-i) in the input image (E).

8. Method according to any one of the preceding claims, wherein the plurality of sensor points (134) are arranged in a sensor area (132) of the image sensor (130; 330),
wherein optionally the plurality of sensor points (134) are determined by a total number of sensor points of the image sensor (130; 330) or by a subset of sensor points of the image sensor (130; 330) by means of which the output image (A) is captured.

9. Method according to any one of the preceding claims,

wherein the image sensor (130; 330) comprises a plurality of color channels and the sequential application of a calculation (210) and a replacement (220) is performed for each of the plurality of color channels, and/or
in connection with claim 7, wherein the determination (402) of the sets of weighting factors ($w_{1j}$ - $w_{qj}$) for the plurality of color channels is performed uniformly or separately for each of the color channels, and/or
wherein the light guide (110; 310) and the image sensor (130; 330) are configured such that a number (r) of the fibers (112) in the light guide (130; 330) and a number (s) of the sensor points (134) of the image sensor (130; 330), by means of which the output image (A) is captured, differ from each other by no more than twenty times, preferably no more than ten times, and more preferably no more than three times of the smaller one of the two numbers (r, s) in each case.

10. Method according to any one of the preceding claims, wherein the input image (E) corresponds to an optical projection of at least one area of an environment that is at least partially coupled into the light guide (110; 330), and/or
further comprising:
storing and/or outputting (440) the input image region brightness values ($H_1$ - $H_q$) in a data format (156) that is suitable for storing and/or displaying a reconstruction (R) of the input image (E).

11. Computer program product comprising portions of program code which, when executed on a programmable computer system, cause the computer system to execute the method according to any of the preceding claims.

12. Apparatus (100; 300) comprising:

   at least one light guide (110; 310) comprising at least partially unsorted fibers (112); and
   at least one image sensor (130; 330) comprising a plurality of sensor points (134) and adapted to capture an output image (A) generated at least in part by transmitting components of an input image (E) by means of the light guide (110; 310);
   at least one information carrier (140; 340) containing data indicating for each of the plurality of sensor points (134, a proportionality with which a brightness in any of different regions (EG-1 - EG-q) of the input image (E) contributes to a detected brightness ($M_j$) of the output image (A) in the area of the respective sensor point (134-j); and
   a processing device (150) comprising a processor unit (152) and a memory device (154) operatively connected to the processor unit (152), wherein the processor unit (152) is configured to execute the method according to any one of claims 1 to 10.

13. Apparatus according to claim 12, wherein the light guide (110; 310) and the image sensor (130; 330) are configured such that a number (r) of the fibers (112) in the light guide (110; 310) and a number (s) of the sensor points (134) of the image sensor (130; 330), by means of which the output image (A) is captured, differ from each other by no more than twenty times, preferably no more than ten times, and preferably no more than three times of the smaller one of the two numbers (r, s) in each case.

14. Use (500) of a method according to any one of claims 1 to 10, a computer program product according to claim 11, and/or an apparatus according to claim 12 or claim 13 for reconstructing a plurality of input images (E) in real time, wherein the input images (E) are coupled into the light guide (110; 310) in connection with real-time imaging,
wherein optionally the use is for the purpose of monitoring a movement and/or a number of moving objects represented by the plurality of input images (E).

**Revendications**

1. Procédé (200 ; 400) pour reconstruire de manière itérative une image d'entrée (E) à partir d'une image de sortie (A) capturée, l'image de sortie (A) étant générée au moins en partie par transmission de composants de l'image d'entrée (E) au moyen d'un guide de lumière (110 ; 310) comprenant au moins en partie des fibres non triées (112), et détectée au moyen d'un capteur d'image (130 ; 330) comprenant une pluralité de points de détection (134), le procédé comprenant :

   - le calcul (210) d'une valeur de luminosité de zone d'image d'entrée ($H_{i'}$) pour une première zone (EG-i) de l'image d'entrée (E) au moins en partie sur la base :

      • au moins une première valeur de luminosité de point de capteur ($M_j$) associée à un premier point de capteur (134-j) du capteur d'image (130) et indicative d'une luminosité détectée de l'image de sortie (A) dans la région du premier point de capteur (134-j),
      • un premier facteur de pondération ($w_{ij}$) associé à la première zone (EG-i) de l'image d'entrée (E) par rapport au premier point de capteur (134-j), et
      • au moins une autre valeur de luminosité de zone d'image d'entrée ($H_k$) qui est associée à une autre zone (EG-k) de l'image d'entrée (E) et qui est pondérée par un autre facteur de pondération ($W_{kj}$) associé à l'autre zone (EG-K) de l'image d'entrée (E) par rapport au premier point de capteur (134-j), et

   - le remplacement (220) d'une première valeur de luminosité de zone d'image d'entrée ($H_i$) associée à la première zone (EG-i) de l'image d'entrée (E) par la valeur de luminosité de zone d'image d'entrée ($H_{i'}$) calculée afin de l'utiliser comme première valeur de luminosité de zone d'image d'entrée ($H_i$) à partir de ce moment,

   dans lequel les étapes de calcul (210) et de remplacement (220) susmentionnées étant appliquées (230 ; 430) de manière séquentielle, et dans lequel le procédé comprend en outre, avant un premier calcul (210) d'une valeur de luminosité de zone d'image d'entrée ($H_1 - H_q$) :

- déterminer (402), pour chacun des multiples points de capteur (134), d'un ensemble de facteurs de pondération ($W_{1j} - w_{qj}$) qui sont chacun associés à une zone différente (EG-1 - EG-q) de l'image d'entrée (E) par rapport au point de capteur respectif (134-j),
dans lequel déterminer (402) l'ensemble de facteurs de pondération ($W_{1j} - W_{qi}$) est effectué au moins en partie sur la base d'une proportionnalité avec laquelle une luminosité dans la zone (EG-1 - EG-q) de l'image d'entrée (E), à laquelle un facteur de pondération respectif ($W_{1j} - w_{qj}$) est associé au point de capteur respectif (134-j), contribue à une luminosité détectée ($M_j$) de l'image de sortie (A) dans la zone du point de capteur (134-j), la proportionnalité étant au moins en partie conditionnée par un agencement de fibres (112) du guide de lumière (110 ; 310), et déterminer (402) l'ensemble de facteurs de pondération comprenant en outre :

• déterminer, pour chacune d'une pluralité de zones (EG-1 - EG-q) de l'image d'entrée (E), une proportionnalité avec laquelle une luminosité dans la zone respective (EG-1 - EG-q) de l'image d'entrée (E) contribue à une luminosité détectée (Mj) de l'image de sortie (A) dans la zone du point de capteur (134-j),
• rejeter les zones (EG-1 - EG-q) de l'image d'entrée (E) pour lesquelles la proportionnalité est inférieure à une proportionnalité seuil,
• déterminer un facteur de pondération ($W_{1j} - w_{qj}$) pour chacune des zones restantes (EG-1 - EG-q) au moins en partie sur la base d'une proportionnalité associée à la zone respective (EG-1 - EG-q), et
• normaliser les facteurs de pondération ($W_{1j} - W_{qj}$).

**2.** Procédé selon la revendication 1, dans lequel les étapes de calcul (210) et de remplacement (220) sont appliquées (230 ; 430) de manière séquentielle :

- à chacune des multiples valeurs de luminosité des points de capteur ($M_1 - M_s$) associées à différents points de capteur (134-1 - 134-s) du capteur d'image (130 ; 330), et/ou
- pour chacune des multiples zones (EG-1 - EG-q) de l'image d'entrée (E), et/ou
- pour chacun d'un ou plusieurs facteurs de

pondération ($W_{11} - W_{qs}$) qui sont respectivement associés à une zone quelconque (EG-1 - EG-q) de l'image d'entrée (E) par rapport à un même point de capteur (134-1 - 134-s) du capteur d'image (130 ; 330), ou
- sous la forme d'une exécution répétée consistant d'abord effectuer le calcul (210) pour chacune des multiples zones (EG-1 - EG-q) de l'image d'entrée (E), puis le remplacement (220) des valeurs de luminosité des zones de l'image d'entrée ($H_1 - H_q$) attribuées aux zones multiples (EG-1 - EG-q) de l'image d'entrée (E) par les valeurs de luminosité de zone d'image d'entrée calculées ($H_{1'} - H_{q'}$).

**3.** Procédé selon la revendication 1 ou la revendication 2, dans lequel l'application séquentielle (230 ; 430) comprend l'application séquentielle des étapes de calcul (210) et de remplacement (220) à chaque valeur de luminosité de point de capteur ($M_1 - M_s$) associée à un point de capteur quelconque (134-1 - 134-s) de la pluralité de points de capteur (134), et/ou pour tous les facteurs de pondération ($W_{1j} - w_{qj}$) associés respectivement à une zone quelconque (EG-1 - EG-q) de l'image d'entrée (E) par rapport à un même point de capteur (134-j) du capteur d'image (130).

**4.** Procédé selon la revendication 1 ou la revendication 2, dans lequel le calcul (210) la valeur de luminosité de la zone d'image d'entrée ($H_{i'}$) est basé sur plusieurs valeurs de luminosité de points de capteur ($M_1 - M_s$) associées à différents points de capteur (134-1 - 134-s) du capteur d'image (130) et indiquant chacune une luminosité détectée de l'image de sortie (A) dans la zone du point de capteur respectif (134-1 - 134-s),

dans lequel, en option, le calcul (210) pour chacune des multiples valeurs de luminosité des points du capteur ($M_1 - M_s$) est effectué au moins en partie sur la base d'un premier facteur de pondération respectif, qui est attribué à la première zone (EG-i) de l'image d'entrée (E) par rapport au point du capteur respectif (134-1 - 134-s), et au moins une autre valeur de luminosité de zone d'image d'entrée respective, qui est associée à une autre zone respective de l'image d'entrée (E) et qui est pondérée par un autre facteur de pondération respectif, qui est associé à l'autre zone respective de l'image d'entrée (E) par rapport au point de capteur respectif (134-1 - 134-s),
dans lequel, en outre, en option, le calcul (210) pour chacune des multiples valeurs de luminosité des points de capteur ($M_1 - M_s$) pour déterminer une valeur de luminosité spécifique au point de capteur pour la première zone (EG-i) de l'image d'entrée (E), et dans lequel le calcul de la valeur de luminosité de la zone d'image d'entrée ($H_{i'}$) est effectué sur la base des multiples valeurs de luminosité spécifiques aux points de capteur pour la première zone (EG-i) de l'image d'entrée (E),

dans lequel, en outre, en option, le calcul (210) la valeur de luminosité de la zone de l'image d'entrée ($H_{i'}$) sur la base des multiples valeurs de luminosité spécifiques aux points de capteur pour la première zone (EG-i) comprend une moyenne des multiples valeurs de luminosité spécifiques aux points du capteur pour la première zone (EG-i),

dans lequel, en outre, en option, le calcul de la moyenne est effectué selon une pondération des multiples valeurs de luminosité spécifiques aux points de capteur pour la première zone (EG-i) sur la base des facteurs de pondération ($W_{i1}$ - $W_{is}$) qui sont attribués à la première zone (EG-i) par rapport aux points du capteur concernés (134-1 - 134-s).

5. Procédé selon la revendication 4, dans lequel l'application séquentielle comprend effectuer de manière répétée d'abord le calcul (210) pour chacune des multiples zones (EG-1 - EG-q) de l'image d'entrée (E), puis le remplacement (220) des valeurs de luminosité de la zone d'entrée ($H_1$-$H_q$) de l'image d'entrée (E) associées aux multiples zones (EG-1 - EG-q) de l'image d'entrée (E) par les valeurs de luminosité de zone d'image d'entrée calculées ($H_{1'}$- $H_{q'}$), le calcul (210) comprenant en outre, pour chacun d'un ou plusieurs facteurs de pondération ($W_{11}$ - $W_{qs}$) qui sont chacun associés à une zone quelconque (EG-1 - EG-q) de l'image d'entrée (E) par rapport à un même point de capteur (134-1 - 134-s) du capteur d'image (130 ; 330).

6. Procédé selon l'une des revendications précédentes, comprenant en outre :
répéter l'application séquentielle (230 ; 430), en particulier jusqu'à ce qu'un critère d'arrêt prédéfini (425) soit atteint.

7. Procédé selon l'une des revendications précédentes, dans lequel le calcul (210) est en outre effectué au moins en partie selon une fonction mathématique au moyen de laquelle la première valeur de luminosité du point de capteur ($M_j$) est mise en relation avec une somme des valeurs de luminosité de la zone d'image d'entrée (H1-Hq) pondérées par leur facteur de pondération respectif ($W_{1j}$-$W_{qj}$), et/ou

comprenant en outre, avant un premier calcul (210) d'une valeur de luminosité de zone d'image d'entrée ($H_1$ - $H_q$) pour une image de sortie capturée, l'attribution (404) d'une valeur de luminosité initiale à chaque zone (EG-1 - EG-q) de l'image d'entrée (E) en tant que valeur de luminosité de zone d'image d'entrée ($H_1$ - $H_q$) de la zone respective (EG-1 - EG-q), et/ou

dans lequel le calcul (210) comprend en outre une atténuation sur la base d'une ou plusieurs valeurs de luminosité de zone d'image d'entrée ($H_i$) préalablement calculées de la première zone (EG-i) de l'image d'entrée (E) et/ou un lissage local sur la base d'une ou plusieurs valeurs de luminosité de zone d'image d'entrée ($H_{i-1}$, $H_{i+1}$) associées à des zones adjacentes (EG-i-1, EG-i+1) de la première zone (EG-i) dans l'image d'entrée (E).

8. Procédé selon l'une des revendications précédentes, dans lequel la pluralité de points de capteur (134) est disposée dans une surface de capteur (132) du capteur d'image (130 ; 330),
dans lequel, facultativement, la pluralité de points de capteur (134) est déterminée par un nombre total de points de capteur du capteur d'image (130 ; 330) ou par un sous-groupe de points de capteur du capteur d'image (130 ; 330) au moyen desquels l'image de sortie (A) est détectée.

9. Procédé selon l'une des revendications précédentes, dans lequel le capteur d'image (130 ; 330) comporte plusieurs canaux de couleur et l'application séquentielle du calcul (210) et du remplacement (220) est effectuée pour chacun des plusieurs canaux de couleur, et/ou

en relation avec la revendication 7, dans lequel déterminer 402) des ensembles de facteurs de pondération ($W_{1j}$ - $w_{qj}$) pour les multiples canaux de couleur est effectuée de manière uniforme ou séparément pour chacun des canaux de couleur, et/ou

dans lequel le guide de lumière (110 ; 310) et le capteur d'image (130 ; 330) sont agencés de telle sorte qu'un nombre (r) de fibres (112) dans le guide de lumière (130 ; 330) et un nombre (s) de points de capteur (134) du capteur d'image (130 ; 330), au moyen desquels l'image de sortie (A) est détectée, ne diffèrent pas de plus de vingt fois, de préférence pas de plus de dix fois, de préférence pas de plus de trois fois, le plus petit des deux nombres (r, s) respectifs.

10. Procédé selon l'une des revendications précédentes, dans lequel l'image d'entrée (E) correspond à une projection optique d'au moins une partie d'un environnement qui est au moins partiellement couplée dans le guide de lumière (110 ; 330), et/ou comprenant en outre :
le stockage et/ou la sortie (440) des valeurs de luminosité de zone d'image d'entrée ($H_1$ -$H_q$) dans

un format de données (156) qui est adapté pour stocker et/ou représenter une reconstruction (R) de l'image d'entrée (E).

11. Produit logiciel comprenant des parties de code de programme qui, lorsqu'elles sont exécutées sur un système informatique programmable, amènent le système informatique à mettre en œuvre le procédé selon l'une des revendications précédentes

12. Dispositif (100 ; 300) comprenant :

   au moins un guide de lumière (110 ; 310) comprenant au moins en partie des fibres non triées (112), et
   au moins un capteur d'image (130 ; 330) comprenant une pluralité de points de capteur (134) et conçu pour capturer une image de sortie (A) générée au moins en partie par la transmission de composants d'une image d'entrée (E) au moyen du guide de lumière (110 ; 310),
   au moins un support d'informations (140 ; 340) contenant des données qui indiquent, pour chacun des multiples points de capteur (134), une proportionnalité avec laquelle une luminosité dans l'une quelconque de différentes zones (EG-1 - EG-q) de l'image d'entrée (E) contribue à une luminosité détectée ($M_j$) de l'image de sortie (A) dans la zone du point de capteur respectif (134-j), et
   un dispositif de traitement (150) comprenant une unité de processeur (152) et un dispositif de stockage (154) connecté de manière opérationnelle à l'unité de processeur (152), l'unité de processeur (152) étant configurée pour exécuter le procédé selon l'une des revendications 1 à 10.

13. Dispositif selon la revendication 12, dans lequel le guide de lumière (110 ; 310) et le capteur d'image (130 ; 330) sont agencés de telle sorte qu'un nombre (r) de fibres (112) dans le guide de lumière (110 ; 310) et un nombre (s) de points de capteur (134) du capteur d'image (130 ; 330), au moyen desquels l'image de sortie (A) est capturée, ne diffèrent pas l'un de l'autre de plus de vingt fois, de préférence de plus de dix fois, de préférence de plus de trois fois, le plus petit des deux nombres (r, s) étant pris en compte.

14. Utilisation (500) d'un procédé selon l'une des revendications 1 à 10, d'un produit logiciel informatique selon la revendication 11 et/ou d'un dispositif selon la revendication 12 ou la revendication 13 pour reconstruire une pluralité d'images d'entrée (E) en temps réel, les images d'entrée (E) étant couplées dans le guide de lumière (110 ; 310) dans le contexte d'une acquisition d'images en temps réel,

dans laquelle, en option, l'utilisation est effectuée dans le but de surveiller un mouvement et/ou un nombre d'objets mobiles représentés au moyen de la pluralité d'images d'entrée (E).

Fig. 1A

EP 4 345 737 B1

100

112-1

112-2

...

112-r

112

114

| 0,40 | 0,31 | 0,28 | 0,35 | 0,40 | 0,44 | 0,39 | 0,23 | 0,32 | 0,37 |
| 0,40 | 0,32 | 0,25 | 0,35 | 0,41 | 0,42 | 0,36 | 0,27 | 0,29 | 0,37 |
| 0,41 | 0,34 | 0,28 | 0,26 | 0,35 | 0,40 | 0,34 | 0,24 | 0,25 | 0,32 |
| 0,40 | 0,39 | 0,36 | 0,29 | 0,26 | 0,33 | 0,33 | 0,25 | 0,32 | 0,38 |
| 0,44 | 0,41 | 0,34 | 0,31 | 0,24 | 0,27 | 0,28 | 0,27 | 0,36 | 0,41 |
| 0,37 | 0,34 | 0,24 | 0,23 | 0,24 | 0,24 | 0,27 | 0,32 | 0,38 | 0,44 |
| 0,37 | 0,32 | 0,25 | 0,26 | 0,29 | 0,28 | 0,27 | 0,35 | 0,44 | 0,46 |
| 0,39 | 0,33 | 0,34 | 0,36 | 0,35 | 0,30 | 0,24 | 0,28 | 0,37 | 0,44 |
| 0,46 | 0,40 | 0,39 | 0,42 | 0,41 | 0,37 | 0,29 | 0,23 | 0,31 | 0,37 |
| 0,48 | 0,45 | 0,43 | 0,46 | 0,47 | 0,40 | 0,33 | 0,28 | 0,32 | 0,36 |

110

116

B1_L

140

125

Fig. 1B

Fig. 1C

Fig. 1D

**Fig. 2**

**Fig. 3**

400

**402**
$w_{ij}$; i=1,...,q
j=1,...,s

**404**
$H_i:=\hat{H}$; i=1,...,q

**406**
i:=1, j:=1

**210**
$H_i'(w_{ij} M_j)$

**220**
$H_i:=H_i'(w_{ij} M_j)$

**425**
Stop?

N

**430**
i:=i+1 mod q
v j:=j+1 mod s

Y

**440**
Result

# Fig. 4

**500**

# Fig. 5

B2_L

B2_E

Fig. 6A

EP 4 345 737 B1

Fig. 6B

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0077555 A1

**In der Beschreibung aufgeführte Nicht-Patentliteratur**

- **VAN SICLEN CLINTON DEW**. Iterative method for solution of radiation emission/transmission matrix equations. *arXiv.org*, January 2011, vol. 4